# EUROPÄISCHE PATENTSCHRIFT

(11) **EP 3 465 854 B1**
(45) Veröffentlichungstag und Bekanntmachung des Hinweises auf die Patenterteilung: **29.10.2025**
(21) Anmeldenummer: 17725938.9
(22) Anmeldetag: 22.05.2017
(51) Int. Cl.: H02G 3/32, B65D 63/10, F16L 3/233

(54) **KONTAKTFREIE HALTERUNG FÜR EIN BINDEGUT - KOPF-MONTAGE**
CONTACT-FREE RETAINER FOR AN ASSEMBLY OF A HEAD AND MATERIAL BEING BOUND
MAINTIEN SANS CONTACT D'UN MATÉRIEL À LIGATURER - MONTAGE TÊTE

(30) Priorität: 23.05.2016 DE 202016102746 U
(43) Veröffentlichungstag der Anmeldung: 10.04.2019
(73) Patentinhaber: HellermannTyton GmbH, 25436 Tornesch (DE)
(72) Erfinder: MATZ, Ole, 24850 Hüsby (DE)
(74) Vertreter: Manitz Finsterwald Patent- und Rechtsanwaltspartnerschaft mbB
(86) Internationale Anmeldenummer: PCT/EP2017/062299
(87) Internationale Veröffentlichungsnummer: WO 2017/202783

(56) Entgegenhaltungen:
- EP-A2- 1 887 232
- FR-A1- 3 017 911
- JP-A- H0 735 269
- JP-A- H06 346 907
- JP-U- S6 043 706
- US-A- 3 672 615
- US-A- 3 913 876
- US-A1- 2002 109 050
- US-A1- 2010 236 030

## Beschreibung

Die Erfindung betrifft ein Befestigungssystem mit einer Haltevorrichtung und einem Kabelbinder, einen Kabelbinder, sowie ein Verfahren zum Befestigen eines Bindeguts unter Verwendung des Befestigungssystems.

Zum Bündeln oder Befestigen von Bindegut an einer weiteren Komponente ist eine Vielzahl von Kabelbindern und entsprechenden Befestigungsmöglichkeiten für Kabelbinder an einer solchen weiteren Komponente bekannt.

Unter einem Kabelbinder ist hier ein in sich zu einer geschlossenen Schlaufe steckbares, definiert und reversibel verformbares Haltemittel zu verstehen. Die Schlaufe wird also durch das In-Sich-Stecken des Kabelbinders gebildet. Durch die Schlaufe hindurch verläuft im endmontierten Zustand des Kabelbinders das Bindegut. Ein Kabelbinder verfügt dabei üblicherweise über einen Kabelbinderkopf, an welchem ein längliches Kabelbinderband angeordnet ist. Kabelbinderkopf und Kabelbinderband können einstückig ausgeführt sein, beispielsweise aus Kunststoff. Das Kabelbinderband ist dabei mit einer Zahnung versehen und kann durch einen Durchlassbereich durch den Kabelbinderkopf hindurchgesteckt werden, um besagte Schlaufe zu bilden. Der Kabelbinderkopf verfügt dabei über eine Rasteinrichtung zum Verrasten mit dem verzahnten Kabelbinderband. Die Rasteinrichtung kann dabei durch ein geeignetes Werkzeug wie beispielsweise einen Schraubendreher oder eine Nadel lösbar ausgeführt sein.

Zur besseren Lesbarkeit werden im Folgenden einige Begriffe definiert, die für das Verständnis der Erfindung wesentlich sind. Eine Außenseite des Kabelbinders ist die Seite von Kabelbinderkopf und Kabelbinderband, welche in einem endmontierten Zustand um und/oder einer Fläche ist dabei durch einen jeweiligen Normalenvektor bestimmt. Auch in einem unmontierten Zustand des Kabelbinders ist die Außenseite so eindeutig bestimmt. Eine Innenseite des Kabelbinders ist die Seite von Kabelbinderkopf und Kabelbinderband, welche in dem endmontierten Zustand um ein Bindegut herum zu dem Bindegut hin orientiert ist. An den Kanten des Kabelbinderbandes zwischen Innen- und Außenseiten beziehungsweise den Flächen zwischen Innen- und Außenseiten des Kabelbinderkopfes befinden sich jeweilige Kantenflächen. Die dem Kabelbinderband abgewandte Seite des Kabelbinderkopfes ist die Rückseite des Kabelbinderkopfes, die dem Kabelbinderband zugewandte Seite des Kabelbinderkopfes, an welchem das Kabelbinderband angeordnet ist, die Vorderseite des Kabelbinderkopfes. Ein Kabelbinder kann dabei alternativ sowohl an der Innenseite als auch an der Außenseite des Kabelbinderbandes verzahnt sein. Entsprechend spricht man von einem außenverzahnten oder innenverzahnten Kabelbinder.

Beispielsweise offenbart die DE 20 2012 006 840 U1 einen solchen Kabelbinder der Firma HellermannTyton mit einem Kabelbinderkopf und einem sich davon weg erstreckenden Kabelbinderband, wobei die Bindegutanlagefläche des Kabelbinderbands in dem gezeigten Fall eine Antirutschstruktur aufweist. Die US 9 387 611 B2 offenbart einen Kabelbinder mit einem Dämpfer.

Üblicherweise wird nun das Bindegut, welches ein einzelnes Kabel, ein einzelnes Rohr und auch um ein Bündel von Rohren oder Kabeln umfassen kann, mit einem Halteelement in die Schlaufe des Kabelbinders eingebunden, um das Halteelement mit dem Bindegut zu verbinden. Das Halteelement kann dann, beispielsweise als Befestigungssockel ausgeführt, an einer weiteren Komponente verschraubt, verklebt oder in anderer Weise befestigt werden. Ein solches Halteelement ist beispielsweise in der WO 2016/020027 A1 offenbart. Auch die US 5 820 083 A offenbart Haltevorrichtungen, welche gemeinsam mit dem Bindegut in die Schlaufe des Kabelbinders eingebunden werden.

Des Weiteren sind beispielsweise aus der EP 2 541 113 A1 und der EP 2 816 691 A1 auch an anderen Komponenten befestigbare Schellen, sogenannte P-Schellen, bekannt, welche mit einem Kabelbinder zusammengezogen werden können, um bündelförmiges Bindegut in unterschiedlichen vorbestimmten Durchmessern an der weiteren Komponente zu befestigen. Da diese Schellen aufgrund ihrer Steifigkeit nur in jeweils einem engen Spektrum an Durchmessern für das Bindegut nutzbar sind, kommt hier typischerweise eine Reihe von unterschiedlichen Ausführungsformen mit unterschiedlichen Durchmessern zum Einsatz.

Es sind auch beispielsweise aus der JP S60 43706 U, der US 3 672 615 A und der JP H07 35269 A Kabelbinderträger bekannt, welche eine Basis mit Befestigungsmitteln zum Befestigen des Kabelbinderträgers an beispielsweise einer Montagefläche, und ein Bandbefestigungselement zum lösbaren Halten eines Kabelbinders aufweisen. Die Oberflächen der jeweiligen Bandbefestigungselements definieren einen Aufnahmeraum für einen Kabelbinderkopf.

Aus der US 2010/0236030 A1 ist ein Kabelbinderband mit einem Dämpfungsteil in einem Kabelbinderkopf-Bereich bekannt. Das Dämpfungsteil ist dazu ausgelegt, Krafteinwirkungen zwischen dem Kabelbinderkopf und dem Bindegut voneinander abzudämpfen. Die JP H06 346907 A beschreibt einen Kabelbinderband mit einer bandartigen Antirutschschicht, welche aus einem elastischen Material mit einem hohen Reibungskoeffizienten gebildet ist und welche sich in Längsrichtung des Kabelbinderbands zwischen dem Bindegut und dem Kabelbinderband erstreckt.

Die FR 3 017 911 A1 offenbart eine Haltevorrichtung für einen Kabelbinder, der ein verzahntes Kabelbinderband und einen Kabelbinderkopf mit einer Rasteinrichtung aufweist, wobei ein Befestigungsfuß zum Befestigen der Haltevorrichtung an einer Komponente vorgesehen ist. Die US 2002/109050 A1 zeigt eine ähnliche Haltevorrichtung für einen Kabelbinder.

Es ergibt sich nun die Aufgabe, ein verbessertes Befestigungssystem mit einer Haltevorrichtung und einem Kabelbinder, einen Kabelbinder, sowie ein Verfahren zum Befestigen eines Bindeguts bereitzustellen, welche insbesondere für Bindegut mit unterschiedlichen Durchmessern geeignet sind und auf kostengünstige Weise auch ein Bindegut mit einer erhöhten Temperatur von beispielsweise über 100°C, bevorzugt über 150° C, schonend und zuverlässig genau in einer vorbestimmten Lage relativ zu einer weiteren Komponente halten können.

Diese Aufgabe wird durch die Gegenstände der unabhängigen Ansprüche gelöst. Vorteilhafte Ausführungsformen ergeben sich aus den abhängigen Ansprüchen, der Beschreibung sowie den Figuren.

Das Befestigungssystem umfasst eine Haltevorrichtung für einen Kabelbinder, welcher ein verzahntes Kabelbinderband und einen Kabelbinderkopf mit einer Rasteinrichtung zum Verrasten mit dem verzahnten Kabelbinderband aufweist. Der Kabelbinder kann aus Kunststoff gefertigt sein. Die Haltevorrichtung kann hier aus Kunststoff bestehen und insbesondere einteilig aus Kunststoff hergestellt sein. Die Haltevorrichtung weist dabei einen Befestigungsfuß zum Befestigen der Haltevorrichtung an einer externen Komponente sowie einen an den Befestigungsfuß angeordneten Befestigungskopf auf. Es kann auch der Befestigungskopf oder der Befestigungsfuß aus Kunststoff bestehen. Insbesondere kann der Befestigungsfuß aus einem Kunststoff und einer mit dem Kunststoff vergossenen Metallkomponente bestehen.

Der Befestigungskopf weist dabei einen Durchlassbereich zum Durchschieben oder Durchstecken des Kabelbinderbandes durch die Haltevorrichtung und zum Halten des Kabelbinders an der Haltevorrichtung auf. Wesentlich ist hier, dass der Durchlassbereich zum konturgenauen Aufnehmen des Kabelbinders zumindest zwei unterschiedlich ausgerichtete Führungskulissen mit jeweils zumindest einem Paar von entgegengesetzt orientierten, insbesondere gegenüberliegenden Stützflächen aufweist. Der Durchlassbereich dient somit mit seinen Führungskulissen bei der Montage des Kabelbinders an der Haltevorrichtung zum definierten Führen des Kabelbinders durch den Durchlassbereich. In dem endmontierten Zustand dient der Durchlassbereich dann zum Halten des Kabelbinders.

Die Orientierungen der Stützflächen der jeweiligen Führungskulissen bestimmen sich hier aus deren jeweiligen Normalenvektoren, welche bei entgegengesetzt orientierten Stützflächen entgegengesetzt orientiert sind, also in entgegengesetzte Richtungen weisen. Unter dem Begriff "im Wesentlichen" kann eine Abweichung der jeweiligen Richtungen um weniger als 30 Grad, weniger als 15 Grad, weniger als 10 Grad, weniger als 5 Grad oder bevorzugt auch weniger als 2 Grad verstanden werden. Die Ausrichtung der Führungskulisse bestimmt sich dabei aus der Lage der beiden Stützflächen. So kann die Ausrichtung einer Führungskulisse durch das Subtrahieren der Normalenvektoren der beiden Stützflächen der Führungskulisse definiert sein, beispielsweise durch eine Ebene senkrecht zu diesem Vektor. Diese Ebene verläuft dann bei parallelen Stützflächen auch parallel zu den Stützflächen der jeweiligen Führungskulisse. Dabei kann die Ausrichtung des Weiteren durch eine Haupterstreckungsrichtung der zugeordneten Stützflächen senkrecht zu den Normalenvektoren bestimmt sein. Insgesamt kann die Ausrichtung somit durch die Richtung vorgegeben sein, in welcher bei bestimmungsgemäßem Gebrauch der Kabelbinder durch die Führungskulisse geschoben oder gezogen wird.

Bei den Stützflächen kann es sich um gegenüberliegende Stützflächen handeln. Zwei Flächen liegen gegenüber, wenn zumindest ein jeweiliger Normalenvektor der einen Fläche durch die andere Fläche verläuft. Es kann sich bei den Stützflächen alternativ auch um gegeneinander versetzte Stützflächen handeln. Zwei Flächen liegen gegeneinander versetzt, wenn kein Normalenvektor der einen Fläche durch die andere Fläche verläuft, sondern alle Normalenvektoren der einen Fläche lediglich durch eine Verlängerung der anderen Fläche in der Ebene der anderen Fläche verläuft. Insbesondere können gegeneinander versetzte Stützflächen derart angeordnet sein, dass der Punkt, an welchem der Normalenvektor der einen Stützfläche die Ebene der anderen Stützfläche schneidet, die Ebene der andere Stützfläche in einem Abstand trifft, welcher von der anderen Stützfläche nicht weiter entfernt ist als die andere Stützfläche in diese Richtung groß ist. Die "Lücke" zwischen den Stützflächen ist in diesem Fall also nicht größer als die Ausdehnung der Stützflächen in diese Richtung.

Dabei sind die Stützflächen zur Führung zugeordneter Flächenbereiche des Kabelbinderkopfes und/oder des Kabelbinderbandes ausgelegt. Die Flächenbereiche des Kabelbinderkopfes und/oder des Kabelbinderbandes liegen sich dabei bevorzugt jeweils gegenüber. Somit ist bei einem an der Haltvorrichtung endmontierten Kabelbinder der Kabelbinderkopf und/oder das Kabelbinderband jeweils zumindest teilweise zwischen die jeweiligen Paaren von Stützflächen der jeweiligen Führungskulisse angeordnet. Die Stützflächen sind also zur Anlage an den zugeordneten Flächenbereichen des Kabelbinderkopfes und/oder des Kabelbinderbandes ausgelegt, insbesondere zu einer formschlüssigen Anlage an den zugeordneten Flächenbereichen des Kabelbinderkopfes und/oder des Kabelbinderbandes. Nach der Endmontage sind also zwischen gegenüberliegenden Stützflächen jeweils Bereiche des Kabelbinders angeordnet.

Dabei ist die erste Führungskulisse mit dem zumindest einen ersten Paar an Stützflächen zur Anlage an Flächenbereichen an Kantenseiten des Kabelbinderkopfes und/oder des Kabelbinderbandes ausgelegt. Ein Abstand der Stützflächen kann also an eine Breite des Kabelbinderkopfes und/oder des Kabelbinderbandes in einer Querrichtung des Kabelbinders von Kantenseite zu Kantenseite angepasst sein. Damit ist bewirkt, dass nach einer Endmontage die Stützflächen der ersten Führungskulisse ein Bewegen des Kabelbinders relativ zur Haltevorrichtung in der Querrichtung, in welche die Kantenseiten des Kabelbinderkopfes und/oder des Kabelbinderbandes jeweils orientiert sind, unterbunden ist. Diese Querrichtung verläuft senkrecht zur Längsrichtung des Kabelbinders, welche dessen Haupterstreckungsrichtung darstellt.

Des Weiteren unterbinden die Stützflächen der zweiten Führungskulisse durch Anlage an jeweilige Flächenbereiche zumindest einer jeweiligen Außen- und/oder Innenseite des Kabelbinderkopfes und/oder des Kabelbinderbandes auch ein Bewegen in einer von der Querrichtung des Kabelbinders verschiedenen zweiten Richtung. Diese zweite Richtung ist dabei bevorzugt im Wesentlichen senkrecht zu der Querrichtung verlaufend. Durch die erste Führungskulisse wird somit der Kabelbinder in der Längsrichtung beweglich geführt und in der Querrichtung gehalten.

Die Haltevorrichtung verfügt somit über eine Käfiggeometrie, in die der Kabelbinder eingeführt und - gegebenenfalls auch das Bindegut - vorfixiert wird. Sie zeichnet sich dadurch aus, dass der Kabelbinder nur seitlich, an den Kantenseiten, sowie an zumindest einer Außenseite, bevorzugt zwei Außenflächen der kopfnahen Wandgeometrie des Kabelbinders und höchstens an zwei Randbereichen der Innenfläche des Kabelbinderbandes durch die Haltevorrichtung berührt oder kontaktiert wird. Die beiden Randbereiche sind dabei durch einen Zentralbereich getrennt. Im endmontierten Zustand des Kabelbinders können die Randbereiche dem Kabelbinderkopf nahe gekommen sein und entsprechend an diesen angrenzen.

Das Verschließen oder Durchstecken des Kabelbinders durch sich selbst, also des Kabelbinderbandes durch den Kabelbinderkopf, führt zur finalen Befestigung oder Endfixierung des Bindeguts. Durch den auf die Kantenseiten des Kabelbinders und die Außenflächen des Kabelbinders, beziehungsweise maximal noch die Randbereiche der Innenfläche des Kabelbinders beschränkten Kontakt des Kabelbinders mit der Haltevorrichtung, bleibt die Haltevorrichtung auf Distanz zu dem Bindegut, bleibt also (zumindest bei Wahl eines geeigneten, unten beschriebenen Kabelbinders) von dem Bindegut beabstandet. Somit kann die Haltevorrichtung das Bindegut nicht mechanisch beschädigen. Gleichzeitig können umgekehrt auch erhöhte Temperaturen des Bindeguts nicht direkt auf die Haltevorrichtung übertragen werden, wodurch ein Vorteil hinsichtlich möglicher Materialien der Haltevorrichtung entsteht. Somit können auch die Herstellungskosten reduziert werden, da lediglich der Kabelbinder die erhöhten Temperaturen unbeschädigt überstehen muss, die Haltevorrichtung auf Grund der Beabstandung jedoch nur geringeren Temperaturen ausgesetzt ist.

Durch den Einsatz der Kabelbindertechnologie, dem Kürzen des Kabelbinderbandes mithilfe eines Werkzeugs auf den existenten Durchmesser des Bindeguts, wird die für unterschiedliches Bindegut erforderliche Bauteilanzahl im Vergleich zur konventionellen Verwendung von Schellen reduziert. So kann mit einem oder zwei Kabelbindern bzw. Kabelbindertypen mit unterschiedlicher Länge Bindegut mit einer Vielzahl von unterschiedlichen Durchmessern befestigt werden. Beispielsweise kann so Bindegut mit einem Durchmesser im Bereich von 5 bis 50 Millimetern befestigt werden. Die Flexibilität der Halterung ist also sehr groß. Es kann so auch durch das Verwenden der Haltevorrichtung mit geringen Kosten eine erweiterbare Bauteilfamilie ermöglicht werden.

Die erste Führungskulisse kann dabei in unterschiedlichen Varianten realisiert sein. So kann die erste Führungskulisse beispielsweise eine erste Stützfläche zur Anlage an einem ersten Flächenbereich einer ersten Kantenseite des Kabelbinderbandes sowie eine zweite Stützfläche zur Anlage an einem zweiten Flächenbereich der gegenüberliegenden Kantenseite des Kabelbinderbandes aufweisen. Sie kann auch eine erste Stützfläche zur Anlage an einen ersten Flächenbereich einer Kantenseite des Kabelbinderkopfes und eine zweite Stützfläche zur Anlage an einen zweiten Flächenbereich der zweiten Kantenseite des Kabelbinderkopfes aufweisen.

Die erste Führungskulisse kann auch unterteilte Stützflächen aufweisen, welche jeweils die Kantenseiten des Kabelbinderbandes und/oder des Kabelbinderkopfes an unterschiedlichen, voneinander beabstandeten (also durch einen von Null verschiedenen Abstand getrennten) Bereichen des Kabelbinders stützen. Die unterteilten Stützflächen haben also Unter-Stützflächen, welche zumindest bereichsweises, also bereichsweise oder ganz, parallel zueinander verlaufen und den Kabelbinder in den unterschiedlichen Bereichen stützen. Beispielsweise kann so bei bestimmungsgemäßem Gebrauch ein kopfnaher Endbereich des Kabelbinderbandes an seinen Kantenseiten von einem Unter-Stützflächenpaar der ersten Führungskulisse gestützt werden und/oder ein zweiter Bereich des Kabelbinderbandes, welcher durch den Kabelbinderkopf gesteckt wird und im endmontierten Bereich an den Kabelbinderkopf angrenzt (oder diesem nahe kommt) an seinen Kantenseiten von einem weiteren Unter-Stützflächenpaar der ersten Führungskulisse gestützt werden. Damit kann ein Abstand zwischen der Haltevorrichtung und dem Bindegut weiter vergrößert und überdies bei der Haltevorrichtung Material gespart werden.

Dabei kann insbesondere auch ein Paar von Unter-Stützflächen an dem Befestigungsfuß angeordnet sein, insbesondere an einem beweglichen Klemmelement. Das Klemmelement wird durch den Kabelbinder dann einerseits besonders genau in einer vorgesehenen Position gehalten, andererseits wird wiederum auch der Kabelbinder genauer geführt und die Stabilität insgesamt verbessert.

In einer vorteilhaften Ausführungsform ist vorgesehen, dass die Führungskulissen ineinander münden. Damit kann das Kabelbinderband und/oder der Kabelbinderkopf beim Einführen in die eine Führungskulisse, insbesondere in die zweite Führungskulisse, zielführend zur anderen Führungskulisse, insbesondere zur ersten Führungskulisse, hin führbar sein.

Somit kann ein zweiter Kabelbinderabschnitt, also beispielsweise der Kabelbinderkopf und/oder das Kabelbinderband oder zumindest ein jeweiliger Teil von Kabelbinderkopf oder das Kabelbinderband, beim Einführen in die eine, z.B. zweite, Führungskulisse nach dem Einführen eines ersten Kabelbinderabschnitts in die andere, z.B. erste, Führungskulisse zielführend zur ersten Führungskulisse hin führbar sein. Dies kann auch umgekehrt gelten. Dies gilt dann zumindest für zwei der Führungskulissen, insbesondere jedoch entsprechend bei mehr Führungskulissen für drei oder alle der Führungskulissen. Besonders vorteilhaft ist es, wenn erste und zweite und/oder erste und eine dritte, weiter unten spezifizierte Führungskulisse ineinander münden. Dabei kann die zweite Führungskulisse in ein erste Paar an Stützflächen der ersten Führungskulisse und die dritte Führungskulisse in ein zweites Paar an Stützflächen der ersten Führungskulisse münden. Insbesondere ist der zweite Kabelbinderabschnitt, dann zum Kabelbinderband gehörig, zielführend mit einem in die erste Führungskulisse eingeführten ersten Kabelbinderabschnitt, beispielsweise dem Kabelbinderkopf, ineinander führbar, insbesondere verrastend ineinander führbar.

Durch die ineinander mündenden Führungskulissen wird so ein besonders genaues und stabiles Halten des Kabelbinders an der Haltevorrichtung ermöglicht. Des Weiteren wird auch eine Bedienbarkeit erhöht, sodass beispielsweise ein Einfädeln in die Führungskulissen erleichtert ist. Zu diesem Zweck können die jeweiligen Stützflächen, insbesondere die gegenüberliegenden Stützflächen, der Führungskulissen auch jeweils für zumindest eine Führungskulisse, also beispielsweise die erste und/oder zweite und/oder dritte Führungskulisse zumindest bereichsweise, also bereichsweise oder vollständig, konisch aufeinander zu laufen.

In einer weiteren vorteilhaften Ausführungsform ist vorgesehen, dass die Führungskulissen jeweils in einem Winkel zwischen 75 und 105 Grad, insbesondere zwischen 85 und 95 Grad, zueinander angeordnet sind. Dies gilt für zumindest zwei der Führungskulissen, insbesondere für zwei Paare von Führungskulissen oder alle Führungskulissen. Die Orientierung der Führungskulissen, anhand derer eine jeweilige Anordnung bestimmt ist, kann hier beispielsweise durch die Orientierung der Stützflächen, das heißt insbesondere einer mittleren Ausrichtung der Stützflächen, bestimmt werden. Für das Bestimmen der mittleren Ausrichtung können beispielsweise die jeweiligen Normalenvektoren der Stützflächenpaare voneinander subtrahiert werden und die Orientierung des jeweiligen resultierenden Vektors unterschiedlicher Führungskulissen verglichen werden. Die genannte Anordnung hat den Vorteil, dass durch die Führungskulissen ein besonders stabiles Halten des Kabelbinders im dreidimensionalen Raum erzielt wird, da die Freiheitsgrade des Kabelbinders so durch die Führungskulissen physikalisch optimal begrenzt werden.

In einer weiteren vorteilhaften Ausführungsform ist vorgesehen, dass der Befestigungskopf im Durchlassbereich zumindest zwei Arme aufweist, welche einen jeweiligen, dem Befestigungsfuß zugeordneten Fußbereich und einen jeweiligen, dem Befestigungsfuß abgewandten Endbereich aufweisen, sowie einen jeweiligen zwischen Fußbereich und Endbereich liegenden Mittelbereich. Der Mittelbereich weist jeweils zumindest eine innenliegende Stützfläche auf, und zwar an der dem jeweils anderen Arm zugewandten Innenseite des jeweiligen Armes. Dabei sind die innenliegenden Stützflächen Teil der ersten Führungskulisse mit dem ersten Paar an Stützflächen. Die Arme sind somit insbesondere ausgelegt, das Kabelbinderband in einem Bereich der Kantenseiten des Kabelbinderbandes bereichsweise mit der jeweiligen innenliegenden Stützfläche zu stützen und eine Querbewegung des Kabelbinderbandes zu verhindern. Dabei sind die innenliegenden Stützflächen der ersten Führungskulisse im endmontierten Zustand bevorzugt jeweils zumindest bereichsweise, also bereichsweise oder ganz, an dem Kabelbinderband angeordnet. Das hat den Vorteil, dass die innenliegenden Stützflächen unabhängig von einem Erreichen des endmontierten Zustands bereits eine seitliche Führung des Kabelbinders bewirken. Dies steht im Gegensatz zum Stand der Technik, bei welchem eine derartige seitliche Führung nicht bekannt ist, sondern vielmehr erst mit dem Verzurren des Kabelbinders und dem Verrasten unter Zugkraft ein seitliches Verrutschen durch eine Reibkraft an der Innenfläche des Kabelbinders und einem mit dem Bindegut eingebundenen Steg einer Halterung erst im endmontierten Zustand erreicht wird. Somit wird durch die Erfindung eine erhöhte Genauigkeit der Führung erreicht.

In den zweiten Führungsflächen der zweiten Führungskulisse kann jeweils in den Endbereichen der Arme eine hervorstehende Nase vorgesehen sein, welche zum Eingriff in eine entsprechende, weiter unten beschriebene Mulde vorgesehen ist. Damit wird eine verbesserte Führung und eine stabilere Halterung des Kabelbinders erreicht.

In einer weiteren Ausführungsform kann, wie oben beschrieben, vorgesehen sein, dass die zweiten Stützflächen der zweiten Führungskulisse relativ zu der ersten Stützfläche der zweiten Führungskulisse mit einer Abweichung entgegengesetzt orientiert sind, also gegeneinander geneigt ausgeführt sind. Die Abweichung kann dabei zwischen 0 Grad und 30 Grad betragen. Bevorzugt beträgt die Abweichung 15 Grad, die zweiten Stützflächen sind somit relativ zur ersten Stützfläche bevorzugt um 15 Grad geneigt. Der entsprechende Winkel kann hier in einer Ebene senkrecht zu der Durchschieberichtung, also bei bestimmungsgemäßem Gebrauch der Haltevorrichtung mit einem Kabelbinder in einer Ebene senkrecht zur Längsrichtung des Kabelbinders gemessen werden. Dabei ist zu beachten, dass die Durchschieberichtung eine lokal variierende Durchschieberichtung sein kann, da beispielsweise aufgrund der unten näher beschriebenen Krümmung der ersten Stützfläche der zweiten Führungskulisse auch der Kabelbinder bei dem Durchschieben gekrümmt und somit die Durchschieberichtung abgeändert wird. Dies reduziert eine Knickbelastung in der Haltevorrichtung und erlaubt überdies einen größeren Abstand zwischen Haltevorrichtung und Bindegut.

Es ist vorgesehen, dass die Arme in ihren Endbereichen durch eine einzige Brücke verbunden sind und somit im Durchlassbereich ein lochartiger Durchlass gebildet ist. Dieser ist durch die Brücke, die Arme und die den Endflächen gegenüberliegende Stützfläche der zweiten Führungskulisse begrenzt. Dabei ist insbesondere eine Höhe des Durchlasses im Wesentlichen senkrecht zu der Durchschieberichtung kleiner als und/oder gleich einer maximalen Höhe des Kabelbinderbandes. Die Höhe des Kabelbinderbandes kann sich aus dem Abstand von Außen- und Innenseite bestimmen. Das hat den Vorteil, dass gerade mit einer nicht senkrecht zur Durchschieberichtung des Kabelbinders bzw. des Kabelbinderbandes orientierten Anschlagfläche ein zusätzliches Verklemmen oder Verrasten des Kabelbinderbandes in dem Durchlassbereich erreicht werden kann. Gerade wenn die Höhe des Durchlasses kleiner ist als die einer maximalen Höhe des Kabelbinderbandes, ergibt sich bei der Verwendung des Kabelbinders mit einer Weich- und einer Hartkomponente, die weiter unten beschrieben sind, beispielsweise mit einer Weichkomponente an einer Innenseite des Kabelbinderbandes, auf elegante Weise die Möglichkeit der Verrastung. Es kann in diesem Fall nämlich ein aus der Weichkomponente bevorzugt an der Innenseite des Kabelbinderbandes geformtes Element bei dem Durchschieben verformt und in eine Verraststellung gebracht werden. Damit kann der Kabelbinder auch an die Haltevorrichtung vormontiert werden, wie im Folgenden anhand einer beispielhaften weiteren Ausführungsform ausgeführt wird.

In einer weiteren Ausführungsform kann nämlich eine Dicke der Brücke in Durchschieberichtung, also Längsrichtung des Kabelrichters im endmontierten Zustand, einem Abstand zwischen der dem Kabelbinderband zugewandten Vorderseite des Kabelbinderkopfes, insbesondere der oben genannten Anschlagfläche, oder einem Abstand zwischen einer von dem Kabelbinderband weg orientierten Führungsfläche im Kabelbinderkopf, an welchem die Außenseite des Kabelbinderbandes bei dem Durchstecken des Kabelbinderbandes durch den Kabelbinderkopf geführt wird, einerseits und einen Rastvorsprung des Kabelbinderbandes an der Innenseite des Kabelbinderbandes andererseits entsprechen. Die Brücke kann dann also im endmontierten Zustand angeordnet sein zwischen dem Rastvorsprung und der Vorderseite des Kabelbinderkopfes und/oder zwischen dem Rastvorsprung und der Innenseite des Kabelbinderbandes. Diese Innenseite des Kabelbinderbandes grenzt dabei insbesondere an einen durch den Kabelbinderkopf gesteckten Bereich des Kabelbinderbandes an.

Die Dicke der Brücke kann somit gleich diesem Abstand oder geringfügig, beispielsweise um weniger 2, 5 oder 10 Prozent größer sein. Das hat den Vorteil, dass die Brücke als Rastvorrichtung für den Kabelbinderkopf an der Haltevorrichtung dient. Ist die Dicke der Brücke an den Abstand der Innenseite des Kabelbinderbandes und dem an einem dem Kabelbinderkopf zugewandten Ende des Kabelbinderbandes angeordneten Rastvorsprung des Kabelbinderbandes an der Innenseite des Kabelbinderbandes angepasst, so wird im endmontierten Zustand, in welchem das Kabelbinderband durch den Kabelbinderkopf gesteckt ist, durch die Brücke der Kabelbinder in einer vorgegebenen Position endfixiert und ist ohne ein Lösen des Kabelbinders nicht mehr verschiebbar. Damit wird ein besonders genaues Halten des Bindeguts mit hoher Präzision erreicht.

In einer anderen Ausführungsform ist vorgesehen, dass der Durchlassbereich eine zu der ersten und zu der zweiten Führungskulisse unterschiedlich orientierte oder angeordnete dritte Führungskulisse mit zumindest einem dritten Paar von jeweils gegenüberliegenden Stützflächen aufweist. Diese Stützflächen sind zur Anlage, insbesondere zur formschlüssigen Anlage, an zugeordnete, jeweils gegenüberliegende Flächenbereiche des Kabelbinderkopfes und/oder des Kabelbinderbandes ausgelegt, sodass bei einem mit Bindegut endmontierten Kabelbinder der Kabelbinderkopf und/oder das Kabelbinderband zumindest teilweise, also teilweise oder ganz, zwischen den Stützflächen angeordnet ist. Die genannten Flächenbereiche des Kabelbinderkopfes und/oder des Kabelbinderbandes können also insbesondere an der Innen- und/oder Außenseite des Kabelbinderkopfes und/oder des Kabelbinderbandes angeordnet sein. Insbesondere können hier die Stützflächen des dritten Paares in eine jeweilige Raumrichtung orientiert sein, welche mathematisch unabhängig von den Raumrichtungen ist, in welche die Stützflächen des ersten und des zweiten Paares orientiert sind. Daraus ergibt sich der Vorteil einer maximalen Stabilität der Stützung des Kabelbinders. Des Weiteren ist so die Position des Kabelbinderkopfes besonders genau vorgebbar und eine Montage, wie in den Ausführungsbeispielen weiter unten erläutert, auch aus unterschiedlichen Winkeln möglich. Somit wird eine größtmögliche Montagefreundlichkeit und Flexibilität der Haltevorrichtung erreicht.

Der Durchlass kann auch hier ein lochartiger Durchlass sein. Der Durchlass kann von den zumindest drei Paaren von Stützflächen begrenzt sein. Eine oder mehrere Stützflächen unterschiedlicher Führungskulissen, insbesondere der ersten und der zweiten, und/oder der ersten und der dritten Führungskulisse, können hier in Eck- oder Anschlussbereichen ineinander übergehen.

Hierbei können die Stützflächen der ersten Führungskulisse senkrecht zu den Stützflächen betrachtet L-förmig ausgeführt sein. Die Stützflächen der ersten Führungskulisse können in einem jeweiligen Endbereichen des ersten Schenkels je in eine Stützfläche der zweiten Führungskulisse übergehen. Alternativ oder ergänzend können die Stützflächen in einem jeweiligen Endbereich des zweiten Schenkels je in eine Stützfläche der dritten Führungskulisse übergehen. Diese drei oder vier Stützflächen sind dabei bevorzugt zumindest im Wesentlichen senkrecht zueinander angeordnet. In dem Winkel des L kann hier in vorteilhafter Weise der Durchlassbereich gebildet werden. Bei einem endmontierten Kabelbinder ist der Kabelbinder mit seinem Kreuzungsbereich, welcher durch das Durchstecken des Kabelbinderbandes durch den Kabelbinderkopf gebildet ist, zwischen dem jeweiligen Winkel der beiden durch die ersten Stützflächen gebildeten L-förmigen Flächen angeordnet. Die Schlaufe des Kabelbinder ist hier in einer Seitenansicht im Bereich zwischen den Schenkeln des L angeordnet, der Kabelbinderkopf im Bereich an der spitzen Ecke des L. So wird durch die Haltevorrichtung in zwei sich diagonal gegenüberliegenden Ecken oder Winkelbereichen, welche durch das Durchführen des Kabelbinders durch sich selbst in dem Kreuzungsbereich erzeugt werden, der Kabelbinder bei einer Befestigung eines Bindeguts an der Innenseite des Kabelbinders in dem Durchlassbereich mit der Haltevorrichtung verklemmt. Dies bewirkt auf genaue, flexible und kostengünstige eine zuverlässige Befestigung des Bindeguts.

Die Brücke, welche in dieser Ausführungsform je zwei gegenüberliegende Endbereiche der beiden L-Schenkel der Stützflächen der ersten Führungskulisse verbindet, kann sich hier beispielsweise an einer Außenseite der L-Schenkel an die L-Schenkel anschließen. Außenseite ist hier beispielsweise jeweils die von dem anderen Schenkel des jeweiligen Ls fort und/oder nicht zu diesem hin orientierte Seite des L-Schenkels. Entsprechend ist die Innenseite dann die sich an den durch die beiden Schenkel des Ls gebildeten Winkel anschließende Seite des Ls. So können die Brücken mit den L-Schenkeln in einem Querschnitt senkrecht zu dem jeweiligen L-Schenkel eine U-förmige Gestalt annehmen. Dabei sind die Stützflächen der ersten Führungskulisse an den zueinander orientierten oder einander zugewandten Innenseiten der U-Seitenschenkel angeordnet und je eine Stützfläche der zweiten bzw. dritten Führungskulisse an dem jeweiligen U-Bodenschenkel.

Das hat den Vorteil, dass im Durchlassbereich eine käfigartige Führungs-und Haltestruktur gebildet wird, bei welcher der Kabelbinder bei dem Durchschieben in der Durchschieberichtung durch die U-förmige Gestalt der Stützflächen in drei Richtungen gestützt wird. Das wird durch die Brücken für zwei Richtungen, die jeweils durch die Ausrichtung der L-Schenkel bestimmt sind, ermöglicht. Dadurch wird bei dem für das Halten des Kabelbinders erforderlichen zweimaligen Durchschieben durch den Durchlassbereich jeweils eine verbesserte Führung und im endmontierten Zustand ein verbessertes Halten erreicht.

In einer weiteren vorteilhaften Ausführungsform ist vorgesehen, dass die zweite Führungskulisse ausgelegt ist, im endmontierten Zustand mit ihrer einen Stützfläche in Anlage, insbesondere in formschlüssiger Anlage, an einen Flächenbereich an der Außenseite des Kabelbinderbandes und mit ihrer anderen Stützfläche an einen Flächenbereich an einer dem Kabelbinderband zugewandten Vorderseite des Kabelbinderkopfes angeordnet zu sein. Insbesondere ist die zweite Führungskulisse somit ausgelegt, ein Bewegen des Kabelbinders in einer Hochrichtung des Durchlassbereiches, welche in einem konkreten Ausführungsbeispiel sowohl einer Durchschieberichtung des Kabelbinders entsprechen, als auch im Wesentlichen senkrecht auf dieser stehen kann, zu unterbinden.

Der Flächenbereich an der Außenseite des Kabelbinders schließt sich hier insbesondere nicht an den Kabelbinderkopf und/oder an einen Bereich der Vorder-und/oder Rückseite des Kabelbinderkopfes an. Es ist zu beachten, dass die Bereichsbezeichnungen hier an dem Kabelbinder in für einen nicht verbauten, also sich nicht in ineinandergestecktem Zustand bezeichnet werden. In einem zusammengesteckten Zustand kann also ein Flächenbereich, welcher sich im nicht verbauten Zustand des Kabelbinders nicht an den Kabelbinderkopf anschließt, durch das Durchstecken in dessen Nähe gelangen. Gerade durch die Abstützung des Kabelbinders durch die Stützflächen der Haltevorrichtung in der Nähe der Rasteinrichtung des Kabelbinderkopfes wird hier eine große Präzision bei der Installation sowie Flexibilität bezüglich der zu verwendenden Kabelbinder erzielt. Durch das Halten des Kabelbinder im Bereich des Kabelbinderkopfes wird der Kabelbinderkopf auch stabilisiert, was die Zuverlässigkeit der Rasteinrichtung erhöht.

In einer weiteren Ausführungsform ist vorgesehen, dass die dritte Führungskulisse ausgelegt ist, im endmontierten Zustand mit ihrer ersten oder einen Stützfläche in Anlage an einen Flächenbereich an der Innenseite des Kabelbinderkopfes angeordnet zu sein und mit ihrer anderen oder weiteren Stützfläche in Anlage einen Flächenbereich an der Außenseite des Kabelbinderkopfes und/oder an der Außenseite des Kabelbinderbandes, welcher sich an den Kabelbinderkopf anschließt, angeordnet zu sein. Insbesondere ist die dritte Führungskulisse somit ausgelegt, ein Bewegen des Kabelbinders in der Tiefenrichtung des Durchlassbereiches bzw. Durchlasses zu begrenzen. Die Tiefenrichtung ist hier im Wesentlichen senkrecht zur Hochrichtung des Durchlassbereiches. Sie kann der Durchlassrichtung durch den Durchlass bei einem Durchstecken des Kabelbinderbandes durch den Kabelbinderkopf bei welchem zugleich, beispielsweise bei der Endmontage, ein zweites Durchschieben des Kabelbinderbandes durch den Durchlass umfasst, entsprechen. Auch hier wird durch das Halten des Kabelbinder im Bereich des Kabelbinderkopfes wird der Kabelbinderkopf nochmals stabilisiert, was die Zuverlässigkeit der Rasteinrichtung weiter erhöht.

In einer anderen vorteilhaften Ausführungsform ist vorgesehen, dass die gegenüberliegenden Stützflächen der ersten Führungskulisse zumindest bereichsweise keilförmig aufeinander zu laufen, insbesondere in der Hoch- und/oder der Tiefenrichtung des Durchlasses. Sie sind dabei darauf ausgelegt, zumindest bereichsweise in Anlage, insbesondere in formschlüssiger Anlage, an jeweilige zugeordnete Flächenbereiche an den Kantenseiten des Kabelbinderkopfes angeordnet zu sein.

Die keilförmigen, aufeinander zu laufenden Stützflächen bieten den Vorteil, dass eine Zugkraft, welche zum Binden des Bindeguts im Kabelbinder aufgebaut wird, zugleich zur verbesserten Anlage, insbesondere zur verbesserten formschlüssigen Anlage, genutzt wird und somit ein Spiel des Kabelbinders, insbesondere des Kabelbinderkopfes in der Haltevorrichtung minimiert wird. Dadurch ergibt sich eine definierte, präzise Fixierung des Kabelbinders an der Haltevorrichtung, bei welcher insbesondere ein Spiel von möglicherweise nicht vollständig passenden Kabelbindern durch geringfügiges Verformen des Kabelbinders und/oder der Haltevorrichtung kompensiert werden kann.

Die Haltevorrichtung kann also dazu ausgelegt sein, dass der Kabelbinder sowohl in Hoch- als auch in Tiefenrichtung des Durchlasses durch den Durchlass durchschiebbar ist, insbesondere, bis sich der Kabelbinderkopf zumindest bereichsweise, also bereichsweise oder ganz, in der für den endmontierten Zustand vorgesehenen Endposition befindet. Hier ist die Durchschieberichtung als die Richtung des zweiten Durchschiebens zu betrachten.

Das hat den Vorteil, dass sich eine besonders flexible Installationsmöglichkeit ergibt, in der die Durchschieberichtung eines ersten Durchschiebens des Kabelbinderbandes durch den Durchlassbereich mit der Durchschieberichtung des zweiten Durchschiebens des Kabelbinderbandes durch den Durchlassbereich, bei welchem das Kabelbinderband zugleich durch den Kabelbinderkopf gesteckt oder geschoben wird, übereinstimmt. Damit kann in flachen, bauraumbegrenzten Situationen, in denen die Haltevorrichtung bereits beispielsweise nahe an einer großen ebenen Oberfläche montiert ist, der Kabelbinder nah an beispielsweise besagter Oberfläche oder allgemein der weiteren Komponente mit seinem Kopf gehalten werden und ist dennoch ohne Probleme dort montierbar.

In einer weiteren, besonders vorteilhaften Ausführungsform ist vorgesehen, dass die Haltevorrichtung zumindest ein zusätzliches Führungselement aufweist, welches insbesondere an die erste Führungskulisse angrenzt, und durch welche ein Durchschieben des Kabelbinders, bis sich der Kabelbinderkopf zumindest bereichsweise, also bereichsweise oder ganz, in der für den endmontierten Zustand vorgesehenen Position befindet, auf ein Durchschieben in im Wesentlichen einer einzigen Richtung festgelegt ist. Das zusätzliche Führungselement kann insbesondere Teil der dritten Führungskulisse sein. Das hat den Vorteil, dass der Kabelbinder in der Haltevorrichtung bereits frühzeitig während des Montagevorgangs nur noch einen translatorischen Freiheitsgrad hat, sodass ein Verrutschen und dergleichen während des Montierens weitgehend ausgeschlossen ist, was die Handhabung besonders einfach macht.

In einer anderen, besonders vorteilhaften Ausführungsform kann hier vorgesehen sein, dass die Haltevorrichtung zumindest ein zusätzliches Rastelement aufweist, durch welches der Kabelbinderkopf in der für den endmontierten Zustand vorgesehenen Endposition in dem Befestigungskopf verrastbar ist. Dabei ist das Rastelement insbesondere an einer Stützfläche der zweiten oder dritten Führungskulisse angeordnet. Das hat den Vorteil, dass der Kabelbinder zuverlässig vormontiert werden kann und bei einer Montage in der Haltevorrichtung an der externen Komponente nicht mehr ungewollt aus der Haltevorrichtung gleiten kann. Auch kann so sichergestellt werden, dass bei dem Verrasten des Kabelbinderbandes mit der Rasteinrichtung des Kabelbinderkopfes dieser nicht innerhalb der Haltevorrichtung verrutscht und somit möglicherweise unter ungünstigen Bedingungen ein Verzurren oder Durchstecken des Kabelbinders erschwert oder unmöglich macht.

Offenbart ist das Befestigungssystem entsprechend Anspruch 1.

Entscheidend ist hier, dass der Kabelbinder im endmontierten Zustand in einer zum Halten des Bindeguts eingestellten Halteform des Kabelbinders derart positioniert ist, dass das von dem Kabelbinder gehaltene Bindegut nur von dem Kabelbinder berührt wird. Das Bindegut ist somit berührungslos und/oder beabstandet zur Haltevorrichtung angeordnet. Dabei kann der Kabelbinder zerstörungsfrei lösbar, also beispielsweise mit einem Werkzeug lösbar, an der Haltevorrichtung anbringbar sein. Das hat den Vorteil, dass ein Wärmeübertrag von einem sich erwärmenden Bindegut, wie beispielsweise elektrische Kabel es darstellen können, auf die Haltevorrichtung minimiert ist. Überdies kann durch die Beabstandung auch eine mechanische Beanspruchung des Bindeguts durch die Haltevorrichtung ausgeschlossen oder verringert werden. Beides erhöht die Flexibilität bei der Materialwahl für die Haltevorrichtung und kann somit zu Kosteneffizienz und Zuverlässigkeit beitragen.

Wesentlich ist hier, dass der Durchlassbereich der Haltevorrichtung und der Kabelbinder zur Anlage der Haltevorrichtung an dem Kabelbinder in ihrer Geometrie jeweils aneinander angepasst sind. Insbesondere kann hier eine jeweils komplementäre Innenkontur der Haltevorrichtung und eine Außenkontur des Kabelbinders aneinander angepasst sein. Insbesondere können der Kabelbinder und die Haltevorrichtung auch zum Formschluss beziehungsweise zur formschlüssigen Anlage der Haltevorrichtung an dem Kabelbinder in ihrer Geometrie aneinander angepasst sein. Das hat den Vorteil, dass die Führung durch die Führungskulissen besonders exakt ist, gegebenenfalls auch die Beabstandung des Bindeguts von der Haltevorrichtung genau eingestellt werden kann. Dabei kann das System einfach, flexibel und billig an eine Vielzahl von unterschiedlichen Verwendungen angepasst werden.

Die Erfindung betrifft auch einen Kabelbinder gemäß Anspruch 3 mit einem verzahnten Kabelbinderband und einem Kabelbinderkopf mit einer Rasteinrichtung zum Verrasten mit dem verzahnten Kabelbinderband. Dieser Kabelbinder kann dabei insbesondere aus Kunststoff, beispielsweise einteilig gefertigt sein.

Das Kabelbinderband schließt sich hier an eine Vorderseite des Kabelbinderkopfes an, wobei seine Haupterstreckungsrichtung die Längsrichtung des Kabelbinders definiert. Das Kabelbinderband weist auch eine Breite in einer Breitenrichtung und eine Dicke in einer Höhenrichtung des Kabelbinders auf. Dabei bestimmt die Breite in einem endmontierten Zustand, bei welchem das Kabelbinderband durch ein Durchstecken durch den Kabelbinderkopf und einem Verrasten mit dem Kabelbinderkopf eine Schlaufe bildet, mit dem Radius der Schlaufe die Größe der dem Bindegut zugewandten Fläche an der Innenseite des Kabelbinderbandes und die Größe der dem Bindegut abgewandten Fläche an der Außenseite des Kabelbinderbandes. Die Dicke des Kabelbinderbandes in der Höhenrichtung bestimmt maßgeblich die Stabilität des Kabelbinderbandes und dessen Flexibilität ohne dabei die dem Bindegut zugewandte und abgewandte Fläche in deren Größe zu beeinflussen. Dabei kann bei einer erhöhten Dicke auch die Verzahnung ausgeprägter ausgebildet werden, sodass die Rasteinrichtung, beispielsweise in Form einer Rastzunge oder Sperrklinke, welche in die Verzahnung eingreift, auch größeren Kräften standhält. Des Weiteren bestimmt die Dicke auch die Größe der an den Kantenseiten des Kabelbinderbandes befindlichen Flächenbereiche und kann so auch einen Einfluss auf eine Führungsstabilität der Führungskulissen, welche mit den Kantenseiten zusammenwirken, bestimmen.

In einer bevorzugten Ausführungsform ist vorgesehen, dass in dem Kabelbinderkopffernen Endbereich des Kabelbinderbandes sowie der Außenseite und/oder zumindest einer Kantenseite des Kabelbinderkopfes eine jeweilige Markierung angebracht ist, wobei die Markierungen derart positioniert sind, dass bei einem Aneinanderlegen der Markierungen durch den Kabelbinder eine Schlaufe mit einem maximalen Radius gebildet wird. Der maximale Radius ist dabei der Radius, bis zu welchem das Kabelbinderband noch zuverlässig mit dem Kabelbinderkopf verrastbar ist. Damit wird erreicht, dass ohne den Kabelbinder zu montieren und/oder zu verrasten leicht erkannt werden kann, ob der gewählte Kabelbinder für ein vorliegendes Bindegut geeignet ist.

Das Kabelbinderband weist eine Hartkomponente und eine im Vergleich zur Hartkomponente weiche Weichkomponente auf. Durch die Hartkomponente sind die Außenseite und die Kantenseiten des Kabelbinderbandes zumindest bereichsweise, also bereichsweise oder ganz, gebildet. Die Weichkomponente erstreckt sich in Form zumindest eines Bandes innenseitig in der Längsrichtung des Kabelbinderbandes entlang der Hartkomponente über einen Großteil, also mehr als 50 Prozent, bevorzugt mehr als 90 oder 95 Prozent, der Länge des Kabelbinderbandes. Das Band kann dabei auch bereichsweise unterbrochen sein. In diesem Fall kann das Band beispielsweise aus einer Reihe von nebeneinander angeordneten Punkten oder Streifen der Weichkomponente gebildet sein. Die Weichkomponente bildet somit zumindest bereichsweise die Innenseite des Kabelbinderbandes. Die Weichkomponente bildet somit innenseitig des Kabelbinderbandes eine Anlagefläche für das Bindegut. Diese Anlagefläche ist dabei im Vergleich zu den Bereichen der Innenseite, welche durch die Hartkomponente gebildet sind (in der Hochrichtung) erhaben.

Die Weichkomponente kann hier ein Silikon und/oder ein thermoplastisches Elastomer (TPE) umfassen. Die Weichkomponente kann in einem Herstellungsverfahren für den Kabelbinder entweder in direktem Anschluss an einen Kabelbinderspritzgussprozess, zum Beispiel als thermoplastische Umformungs-(TPU)-Weichkomponente aufgebracht werden oder aber in einem separat erfolgenden Fügeprozess, beispielsweise in Form von einem Auftragen von Flüssigsilikon oder dem Anbringen eines Klebepads auf den Kabelbinder.

Hieraus ergibt sich der Vorteil, dass das Bindegut vor einer Abrasion durch Kontakt mit der Hartkomponente des Kabelbinders bei Vibrations- und Schockbeanspruchung geschützt ist, indem sie das Bindegut beabstandet von der Hartkomponente, insbesondere von der durch die Hartkomponente gebildeten Fläche an der Innenseite, hält oder fixiert. Somit wird durch die Haltevorrichtung eine berührungsfreie oder kontaktfreie Halterung für das Bindegut realisiert. Zugleich wird durch die Beabstandung auch ein Schutz der Halterung vor erhöhten Bindegut- oder Bündeltemperaturen erzielt, sodass eine Halterung, welche lediglich mit der Hartkomponente in Kontakt kommt, aus einem weniger temperaturresistenten und kostengünstigeren Material gefertigt sein kann. Überdies wird durch die Weichkomponente eine Axialbewegung des Bindegut relativ zur Kabelbinderschlaufe verhindert, da die Weichkomponente eine im Vergleich zur Hartkomponente erhöhte Haftreibung besitzt.

Das Anbringen der Weichkomponente an dem flexiblen Kabelbinder bietet überdies den Vorteil, dass auf herstellungstechnisch einfache Weise in der Weichkomponente selbst Profile oder Strukturen realisiert werden können. Da bei in der Herstellung das Kabelbinderband nicht in den Kabelbinderkopf versteckten ist, ist die Innenseite des Kabelbinderbands aufgrund der dann geraden Form ohne Weiteres mit einem Werkzeug zum Prägen oder Formen der Weichkomponente zugänglich. Dabei kann das Werkzeug auch problemlos wieder aus einer gegossenen Struktur oder einem gegossenen Profil entfernt werden kann. Somit kann der Kabelbinder bzw. dessen Innenseite flexibel an jeweilige Bedürfnisse angepasst werden. In für die Kabelbindertechnologie bekannter Weise bieten sich die genannten Vorteile hier für eine große Bündel- oder Bindegutdurchmesservarianz bei einer geringen Bauzahl, sodass ein flexibler, kostensparender Einsatz des Kabelbinders, insbesondere mit einer entsprechenden Haltevorrichtung, beziehungsweise eines entsprechenden Befestigungssystems gegeben ist.

Das Band der Weichkomponente kann im Querschnitt senkrecht zur Längsrichtung, also in Randbereichen, welche den Kantenseiten des Kabelbinders zugewandt sind, erhaben sein, also eine im Vergleich zu einem Zentralbereich erhöhte Dicke in Hochrichtung des Bandes aufweisen. Hieraus ergibt sich der Vorteil einer erhöhten Haftreibung senkrecht zum Band der Weichkomponente, also im endmontierten Zustand eine verbesserte Verhinderung von axialer Bewegung des Bindeguts in dem Kabelbinder. Des Weiteren kann so gegebenenfalls durch ein Luftpolster zwischen den randseitigen Erhöhungen, das im Zentralbereich gebildet wird, eine verbesserte thermische Isolation erzielt werden. Der im Vergleich zu den Randbereichen des Weichkomponentenbandes Zentralbereich mit verringerter Dicke kann hier beispielsweise als eine Nut ausgeführt sein.

Der Kabelbinderkopf kann vollständig oder teilweise, insbesondere überwiegend, durch die Hartkomponente gebildet sein. Überwiegend aus der Hartkomponente gebildet ist der Kabelbinderkopf beispielsweise, wenn er über eine Rasteinrichtung mit einer Metallzunge verfügt und sonst aus der Hartkomponente besteht. Der Kabelbinderkopf kann dabei auch in Richtung des Kabelbinderbandes an Innen- und/oder Außenseite oder an einer oder beiden der Kantenseiten keilförmig auf das Kabelbinderband zu laufen. Daraus ergibt sich der Vorteil, dass die oben beschriebenen Haltevorrichtungen sich besonders leicht zur formschlüssigen Aufnahme des Kabelbinderkopfes ausbilden lassen, wodurch eine verbesserte Führung und Stabilität des Kabelbinders in der Haltevorrichtung beziehungsweise dem Befestigungssystem erzielt wird. Unter konisch aufeinander zu laufen kann hier insbesondere verstanden werden, dass ebene Flächen aufeinander zu laufen.

In einer vorteilhaften Ausführungsform ist vorgesehen, dass die Innenseite in an die Kantenseiten angrenzenden Randbereichen des Kabelbinderbandes zumindest bereichsweise, also bereichsweise oder ganz, durch die Hartkomponente gebildet ist. Die Randbereiche können sich hier in der Längsrichtung des Kabelbinderbandes über einen Großteil des Kabelbinderbandes, also 50 Prozent oder mehr, bevorzugt 90 oder 95 Prozent oder mehr, erstrecken. Durch die Weichkomponente ist also in diesem Fall ein erhabener Mittelbereich an der Innenseite des Kabelbinderbandes gebildet, welcher in Richtung der Kantenseiten durch die durch die Hartkomponente gebildeten Randbereiche begrenzt ist.

Es ist somit also die Breite des Kabelbinderbandes von Kantenseite zu Kantenseite senkrecht zur Längsrichtung des Kabelbinderbandes größer als die Breite des zumindest einen Bandes der Weichkomponente. Durch die senkrecht zur Längsrichtung des Kabelbinderbandes über das Band der Weichkomponente überstehenden Bereiche der Hartkomponente werden somit Führungsschienen gebildet.

Dadurch ergibt sich der Vorteil, dass einerseits die empfindlichere Weichkomponente durch den überstehenden Rand der Hartkomponente mechanisch vor Beschädigung geschützt ist, andererseits bildet der überstehende Randbereich der Hartkomponente auch einen thermischen Schutz einer zugeordneten Haltevorrichtung des Kabelbinders zum Halten des Kabelbinders an einer weiteren Komponente, wenn sich der Rand zwischen der Haltevorrichtung und dem Bindegut befindet. Dies ist in den oben beschriebenen Ausführungsformen zur Haltevorrichtung beispielsweise der Fall. Besonders wichtig ist, dass der Rand, also die Führungsschienen, auch für ein Führen und Halten des Kabelbinders durch eine Haltevorrichtung genutzt werden kann, beispielsweise durch ein bereichsweises Umgreifen des durch die Hartkomponente gebildeten Randbereiches durch Arme der Haltevorrichtung mit entsprechenden Führungskulissen, wie dies oben beschrieben ist. Gerade das Führen und Halten des Kabelbinders an durch die Hartkomponente gebildeten Bereich ist hier vorteilhaft, das es ein Führen bzw. Halten mit erhöhter Präzision zur Folge hat.

Dabei kann insbesondere vorgesehen sein, dass die Weichkomponente zusätzlich zu dem Band in einem an die Randbereiche des Kabelbinderbandes angrenzenden jeweiligen Grenzbereich des Bands je einen Flügel bildet, welcher sich in einem Querschnitt in der Breitenrichtung des Kabelbinderbandes ausgehend von dem Band der Weichkomponente beabstandet von dem entsprechenden Randbereich des Kabelbinderbandes fort von dem Kabelbinderband und/oder in der Breitenrichtung fort von dem Band der Weichkomponente erstreckt.

Das hat den Vorteil, dass bei Gebrauch des Kabelbinders mit einer der vorgeschlagenen Haltevorrichtungen ein Kontakt des Bindeguts mit der Haltevorrichtung und eine entsprechende Abrasion des Bindeguts noch besser vermieden wird.

In einer weiteren Ausführungsform ist vorgesehen, dass die Hartkomponente zwischen den Randbereichen einen gegenüber den Randbereichen in der Hochrichtung erhabenen Mittelteil aufweist, auf welchem die Weichkomponente angeordnet ist. Das hat den Vorteil, dass der Abstand zwischen der Haltevorrichtung und dem Bindegut erhöht wird, nämlich um eine Dicke des Mittelteils in Hochrichtung, und die Weichkomponente dafür nicht dicker ausgeführt werden muss. Dies ist vorteilhaft für die Stabilität des Kabelbinders.

Alternativ oder ergänzend kann vorgesehen sein, dass das Kabelbinderband außenseitig eine entlang des Kabelbinderbandes verlaufende Aussparung oder Nut aufweist. Die Aussparung kann dabei wie die Weichkomponente über einen Großteil des Kabelbinderbandes verlaufen, bevorzugt jedoch über das gesamte Kabelbinderband. Das hat den Vorteil, dass bei Materialersparnis dennoch eine große Dicke des Kabelbinderbandes mit den im letzten Absatz erläuterten Vorteilen erreicht wird. Überdies kann durch einen entsprechenden Vorsprung in der ersten Stützfläche der zweiten Führungskulisse der entsprechenden Haltevorrichtung, welcher bei dem Durchschieben in die Aussparung eingreift, der Kabelbinder und damit das Bindegut auch bei Belastung zuverlässiger in der vorgesehenen Position gehalten werden.

Alternativ oder ergänzend kann vorgesehen sein, dass die Randbereiche des Kabelbinderbandes jeweils eine entlang des Kabelbinderbandes verlaufende Mulde aufweisen. Die Mulde verläuft also innenseitig in dem Kabelbinderband. Dadurch kann mittels einer entsprechenden Nase in den zweiten Führungsflächen der zweiten Führungskulisse, welche in die Mulde eingreifen, ein Verrutschen des Kabelbinderbandes in der Breitenrichtung bei einer belastungsbedingten Deformation des Kabelbinderbandes erschwert oder verhindert werden. Dies dient besonders in Kombination mit der im letzten Absatz genannten Aussparung und insbesondere auch dem entsprechenden Vorsprung in der Haltevorrichtung einem besonders zuverlässigen Führen und Halten von Kabelbinder und Bindegut.

In einer weiteren Ausführungsform ist vorgesehen, dass die Dicke des Kabelbinderbandes in den Randbereichen zur zugeordneten Kantenseite hin abnimmt. Insbesondere kann die Dicke zumindest bereichsweise linear abnehmen, sodass die Innenseite des Kabelbinderbandes in einem Querschnitt in der Breitenrichtung im Randbereich zumindest bereichsweise gegenüber der Außenseite des Kabelbinderbandes geneigt ist. Bevorzugt ist dabei die Innenseite in dem Randbereich um 15 Grad oder mit einer vorgegebenen Toleranz um 15 Grad geneigt. Die Toleranz kann beispielsweise 2 Grad oder 5 Grad oder 10 Grad oder 15 Grad betragen. Das hat den Vorteil, dass der Abstand zwischen Hartkomponente und Bindegut im Randbereich erhöht wird. Überdies wird durch den geneigten Verlauf der Innenseite auch eine Stabilität des Kabelbinderbandes erhöht. Schließlich können so entsprechend auch die zweiten Stützflächen der zweiten Führungskulisse relativ zu der ersten Stützfläche der zweiten Führungskulisse geneigt, beispielsweise um die genannten 15 Grad geneigt, ausgeführt sein. Dies reduziert eine Knickbelastung in der Haltevorrichtung und erlaubt überdies einen größeren Abstand zwischen Haltevorrichtung und Bindegut.

Es ist vorgesehen, dass in einem dem Kabelbinderkopf näheren ersten Endbereich des Kabelbinderbandes die Dicke der Weichkomponente zu einem dem Kabelbinderkopf zugewandten Ende des Kabelbinderbandes, also zum Kabelbinderkopf hin, rampenartig zunimmt. Dabei kann die Dicke der Weichkomponente im Bereich der Rampe um einen Faktor zwischen 1,5 und 3,5, bevorzugt um einen Faktor von 2,5, zunehmen. Das hat den Vorteil, dass einerseits ein in der Nähe des Kabelbinderkopfes typischerweise im endmontierten Zustand auftretende Knickbelastung durch ein Anpressen des Kabelbinderkopfes an das Bindegut zumindest teilweise kompensiert werden kann. Vor allem aber kann durch besagte Rampe ein Abstand des Bindeguts von einer Haltevorrichtung im Bereich des Kabelbinderkopfes sichergestellt werden. Somit können beispielsweise die weiter oben genannten Haltevorrichtungen den Kabelbinderkopf ganz oder bereichsweise an einer oder mehreren Seiten fest umgreifen und eine präzise Führung durch entsprechende Führungskulissen sicherstellen, ohne dass die Haltevorrichtung Gefahr läuft, dem beispielsweise heißen Bindegut zu nahe zu kommen. Des Weiteren kann das dem Kabelbinderkopf zugewandte Ende der Rampe auch als Anschlagfläche für die Haltevorrichtung, beispielsweise auch als Rastfläche mit einer Brücke der Haltevorrichtung, ausgelegt sein. Hierfür ist dann insbesondere ein Abstand zwischen der Anschlagfläche der Rampe und einer Vorderseite des Kabelbinderkopfes oder einer Führungsfläche für das Kabelbinderband in dem Kabelbinderkopf an die geometrischen Ausmaße der Brücke anzupassen.

Es ist vorgesehen, dass die Weichkomponente in dem Endbereich mit der erhöhten Dicke, der Rampe, an der Innenseite des Kabelbinderbandes eine Lippe aufweist, welche von der Hartkomponente beabstandet ist, also einen von Null verschiedenen Abstand aufweist, und sich von dem Endbereich der erhöhten Dicke, also der Rampe, in Richtung Kabelbinderkopf erstreckt. Bevorzugt kann die Lippe sich dabei auch von dem Kabelbinderband fort erstrecken. Die Lippe kann also insbesondere als eine Weiterführung der Rampe in Richtung des Kabelbinderkopfes verstanden werden, welche sich bevorzugt zum Kabelbinderkopf oder der Rückseite des Kabelbinderkopfes hin immer weiter von dem Kabelbinderband ablöst oder entfernt. Damit weist die Weichkomponente insbesondere in dem ersten Endbereich eine zwangsentformte Geometrie auf.

Die Lippe kann auch als in Längsrichtung des Kabelbinderbandes freikragender Flügel bezeichnet werden. Insbesondere kann die Lippe sich in einer Projektion senkrecht auf die Innenseite des kabelbinderkopfnahen Endes des Kabelbinders oder den Kabelbinderkopf einer Führungsfläche des Kabelbinderkopfes annähern oder sich bis zu dieser Führungsfläche erstrecken. Die Führungsfläche dient dabei dem Führen der Innenseite des Kabelbinderbandes im Kabelbinderkopf. Erstreckt sich die Lippe bis zu der Führungsfläche, so kann die Lippe eine Innenseite des durch den Kabelbinderkopf geschobenen Kabelbinderbands berühren oder zumindest bei eingebundenem Bindegut berühren.

Das hat den Vorteil, dass der Abstand zu zwischen der Rampe und einer Innenseite der Rasteinrichtung im Kabelbinderkopf verringert wird und somit eine Lücke, welche bei dem Verrasten des Kabelbinderkopfes mit dem Kabelbinderband zwischen unterschiedlichen Bereichen der Weichkomponente im Bereich des Kabelbinderkopfes verkleinert wird. Damit wird auch die Gefahr verringert, dass ein Bindegut doch in Kontakt mit der Halteeinrichtung kommt. Wird der Kabelbinder ohne eine der vorgeschlagenen Haltevorrichtungen verwendet, so kann im Vergleich zur Rampe ohne Lippe mit dem entsprechenden Bindegut eine rundere Schlaufe erreicht werden, was die Flexibilität der Verwendung des Kabelbinders erhöht.

In einer anderen bevorzugten Ausführungsform ist vorgesehen, dass in einem dem Kabelbinderkopf ferneren zweiten Endbereich des Kabelbinderbandes zu einem dem Kabelbinderkopf abgewandten Ende des Kabelbinderbandes hin die Weichkomponente eine Schwelle aufweist. Diese kann gebildet sein, indem die Dicke der Weichkomponente im zweiten Endbereich in Richtung des dem Kabelbinderkopf abgewandten Endes zunächst zunimmt, um sodann auf 0 abzusinken oder auszulaufen. Die Weichkomponente umfasst hier also eine rampenartige Schwelle. Die Gesamtdicke des Kabelbinderbandes kann im Bereich der rampenartigen Schwelle eine Öffnungsgröße einer Öffnung zum Durchstecken und Verrasten des Kabelbinderbandes in dem Kabelbinderkopf übersteigen. Dies ist unproblematisch, da bei dem Einstecken oder Durchstecken des Kabelbinderbandes in den Kabelbinderkopf das Kabelbinderband in dem zweiten Endbereich verformbar ist. Zugleich ist das Kabelbinderband in dem zweiten Endbereich nicht verzahnt, sodass ein Einstecken des zweiten Endbereichs des Kabelbinderbandes in den Kabelbinderkopf nicht zu einem Verrasten des Kabelbinderkopfes mit dem Kabelbinderband führt.

Das hat den Vorteil, dass der Kabelbinder zunächst mit dem zweiten Endbereich in den Kabelbinderkopf eingeführt oder durchgesteckt werden kann, ohne dass dabei ein - oft nur schwer oder nur mit Werkzeug lösbares - Verrasten des verzahnten Kabelbinderbandes mit der Rasteinrichtung des Kabelbinderkopfes erfolgt. Zugleich stellt die Weichkomponente beziehungsweise die von der Weichkomponente gebildete rampenartige Schwelle jedoch nach einem Durchstecken der Schwelle durch den Kabelbinderkopf sicher, dass das Kabelbinderband sich nicht ungewollt selbsttätig wieder aus dem Kabelbinderkopf löst. Unbeschadet dessen kann die auf diese Art und Weise erreichte Vormontage des Kabelbinders jedoch werkzeugfrei wieder gelöst werden, was die Flexibilität bei der Montage erhöht.

In einer weiteren Ausführungsform ist vorgesehen, dass die Hartkomponente außenseitig in dem zweiten Endbereich, insbesondere an das entsprechende Ende angrenzend, einen erhabenen Gleitvorsprung aufweist. Bevorzugt ist dieser mittig angeordnet. Insbesondere ist der Gleitvorsprung kugelsegmentförmig. Der Gleitvorsprung erleichtert das Durchschieben des Kabelbinders durch die Haltevorrichtung und ist gerade bei einer Haltevorrichtung, deren zweite Führungskulisse eine gewölbte erste Stützfläche aufweist, vorteilhaft, da mit dem Gleitvorsprung ein Verhaken des Kabelbinders in der zweiten Führungskulisse vermieden wird.

In einer anderen vorteilhaften Ausführungsform ist vorgesehen, dass in dem Kabelbinderband zwischen dem zweiten Endbereich und der Verzahnung und/oder zwischen dem Endbereich und der Weichkomponente ein Rastfederelement vorhanden ist. Das hat den Vorteil, dass der Kabelbinder zunächst mit dem zweiten Endbereich in den Kabelbinderkopf eingeführt oder durchgesteckt werden kann, ohne dass dabei ein - oft nur schwer oder nur mit Werkzeug lösbares - Verrasten des verzahnten Kabelbinderbandes mit der Rasteinrichtung des Kabelbinderkopfes erfolgt. Zugleich stellt das Rastfederelement nach einem Durchstecken der Schwelle durch den Kabelbinderkopf sicher, dass das Kabelbinderband sich nicht ungewollt selbsttätig wieder aus dem Kabelbinderkopf löst. Unbeschadet dessen kann die auf diese Art und Weise erreichte Vormontage des Kabelbinders jedoch werkzeugfrei wieder gelöst werden, was die Flexibilität bei der Montage erhöht. Die oben beschriebene rampenartige Schwelle kann dabei verhindern, dass das Kabelbinderband ungewollt weiter durch den Kabelbinderkopf geschoben wird und mit der Verzahnung in dem Kabelbinderkopf verrastet.

In einer weiteren vorteilhaften Ausführungsform ist vorgesehen, dass die Weichkomponente innenseitig eine Nut aufweist, die sich über einen Großteil des Bandes der Weichkomponente entlang des Bandes der Weichkomponente erstreckt. Dabei weist der Kabelbinderkopf in der Öffnung zum Durchstecken des Kabelbinderbandes durch den Kabelbinderkopf an einer Innenseite der Öffnung einen Vorsprung auf, welcher bei dem Durchstecken des Kabelbinderbandes durch die Öffnung in die Nut ragt. Das hat den Vorteil, dass die Stabilität des Kabelbinderkopfes erhöht ist sowie eine verbesserte Führung des Kabelbinderbandes durch den Kabelbinderkopf erzielt wird. Besonders vorteilhaft ist hier die Kombination mit der im letzten Absatz beschriebenen rampenartigen Schwelle der Weichkomponente, welche beispielsweise am Ende der Nut angeordnet sein kann und bei welcher dann der Vorsprung mit der rampenartigen Schwelle zusammenwirkt, um die im letzten Absatz genannten Vorteile zu erreichen.

Der Vorsprung kann auch unabhängig von der Nut vorgesehen sein. Sowohl bei vorhandener als auch bei nicht vorhandener Nut kann der Vorsprung so weit vorspringend und entsprechend das Kabelbinderband so ausgebildet sein, dass bei durch den Kabelbinderkopf durchgeschobenem Kabelbinderband der Abstand zwischen der Hartkomponente und Vorsprung geringer ist als die Dicke der Weichkomponente, die Weichkomponente durch den Vorsprung also verformt ist. Auf Grund der größeren Nähe des Vorsprungs zu der Hartkomponente wird die Verformung des Kabelbinderbandes bei einer Zugbelastung durch eine verbesserte Abstützung des Kabelbinderbandes reduziert und somit die Zuverlässigkeit des Kabelbinders erhöht. Diese Verformung ist wegen der Weichkomponente ausgeprägter als in gewöhnlichen Kabelbindern.

In einer anderen Ausführungsform ist vorgesehen, dass eine Rastkante, mit welcher die Rastzunge in die Verzahnung des Kabelbinderbandes eingreift, in der Breitenrichtung gekrümmt ist. Damit wird erreicht, dass bei einer belastungsbedingten Verformung des Kabelbinderbandes die Rastzunge noch über die ganze Breite der Rastkante mit der Verzahnung in Eingriff steht. Folge ist eine erhöhte Zuverlässigkeit des Kabelbinders, welche gerade wegen der auf Grund der Weichkomponente schwerer zu beherrschenden Verformung bei Belastung wichtig ist.

In einer weiteren Ausführungsform ist vorgesehen, dass die Rastzunge an der Rastkante breiter ist als in einem Bereich der Rastzunge, welcher bei Verrasten des Kabelbinderbandes mit dem Kabelbinderkopf nicht mit der Verzahnung in Kontakt kommt. Dies führt bei Belastung und Verformung des Kabelbinderbandes dazu, dass die Randbereiche des dann gewölbten Kabelbinderbandes die Rastzunge nicht aus der Verrastung drücken, da die Randbereiche der Rastkante nachgeben können. Auch damit wird die Zuverlässigkeit des Kabelbinders erhöht.

In einer weiteren, besonders vorteilhaften Ausführungsform ist vorgesehen, dass die Weichkomponente sich in Form zumindest zweier Bänder innenseitig in der Haupterstreckungsrichtung, der Längsrichtung, des Kabelbinderbandes entlang der Hartkomponente über einen Großteil des Kabelbinderbandes erstreckt. Dabei kann insbesondere zwischen den Bändern durch die Hartkomponente eine Verzahnung für die Rasteinrichtung des Kabelbinderkopfes ausgebildet sein. In diesem Fall wird ein innenverzahntes Kabelbinderband gebildet, welches seitlich der Verzahnung Weichkomponentenbänder aufweist. Alternativ kann hier oder in den anderen genannten Ausführungsformen die Verzahnung auch an der durch die Hartkomponente gebildeten Außenseite des Kabelbinderbandes ausgebildet sein. In diesem Fall wird ein außenverzahntes Kabelbinderband gebildet.

Es ergibt sich hier der Vorteil einer zusätzlichen thermischen Isolation durch das Luftpolster zwischen den Bändern. Des Weiteren ist die Verzahnung so besonders gut vor Schmutz geschützt, sodass auch unter ungünstigen Bedingungen eine Beeinträchtigung der Belastbarkeit der Rastverbindung zwischen Kabelbinderkopf und Kabelbinderband ausgeschlossen ist. Auch an der Außenseite verschmutzt der Kabelbinder somit weniger beziehungsweise ist leichter zu reinigen. Durch die Verwendung der zumindest zwei Bänder der Weichkomponente kann auch eine Haftreibung in axialer Richtung im endmontierten Zustand erhöht werden.

In einer weiteren besonders vorteilhaften Ausführungsform ist vorgesehen, dass die Weichkomponente beziehungsweise das Band oder die Bänder der Weichkomponente innenseitig ein Profil oder eine Struktur aufweist. Diese Struktur oder dieses Profil kann dabei eine Struktur oder Profiltiefe haben, welche zwischen 33 und 66 Prozent des Betrags der Dicke der Weichkomponente erreicht, bevorzugt zwischen 45 und 55 Prozent. Das hat den Vorteil, dass eine Haftreibung und ein Schutz des Bindeguts vor Abrasion durch Kontakt mit Festmaterialien bei Vibrations- und Schockbeanspruchung verbessert werden kann.

Hierbei kann insbesondere vorgesehen sein, dass das Profil zumindest eine Reihe, bevorzugt zwei, insbesondere parallele, Reihen von entlang der Längsrichtung des Kabelbinderbandes alternierend angeordneten Dreiecken aufweist. Die Dreiecke können dabei insbesondere identisch sein. Die Spitzen der Dreiecke sind dabei bevorzugt senkrecht zur Längsrichtung des Kabelbinders oder Kabelbinderbandes orientiert. Gerade die genannten Ausführungen des Profils haben sich hier in Versuchen als besonders vorteilhaft und günstig erwiesen, um eine Axialbewegung des Bindeguts zu begrenzen. Überdies sind die genannten Strukturen an einer konvexen Fläche herstellungstechnisch schwierig zu realisieren, sodass hier die Anbindung an den Kabelbinder besondere Vorteile mit sich bringt.

In einer weiteren vorteilhaften Ausführungsform ist vorgesehen, dass die Hartkomponente innenseitig in einem von der Weichkomponente bedeckten Flächenbereich zumindest ein Kopplungselement, bevorzugt aber eine Vielzahl von Kopplungselementen, aufweist, welches form- und kraftschlüssig an der Weichkomponente angeordnet ist. Dabei können Hart- und Weichkomponenten insbesondere von Hinterschneidungen bilden, bevorzugt durch einen Verguss der Weichkomponente mit der Hartkomponente. Das hat den Vorteil, dass Hart- und Weichkomponente besonders innig miteinander verbunden sind und auch bei einem Verformen des flexiblen Kabelbinders, beispielsweise bei der Endmontage, in welcher das Kabelbinderband durch den Kabelbinderkopf gesteckt und in diesem verrastet wird, fest und definiert an der Hartkomponente verbleibt und so das Bindegut zuverlässig und flexibel in der vorgegebenen Position hält.

Das Kopplungselement kann dabei eine Tasche, insbesondere eine Tasche mit einer Hinterschneidung, und/oder einen Zapfen, insbesondere einen pilzförmige Zapfen, umfassen. Alternativ oder ergänzend kann das Kopplungselement eine parallel zur Längsrichtung des Kabelbinderbands verlaufende Nut und/oder erhabene Schiene umfassen. Dadurch kann eine zuverlässige Verbindung zwischen Hartkomponente und Weichkomponente erreicht werden, beispielsweise durch ein Vergießen oder Verkleben der Weichkomponente mit der Hartkomponente. Da Nut und Schiene hier ein Spiel von Weichkomponente zu Hartkomponente in der Längsrichtung zulassen, kann ein derartiger Kabelbinder besonders leichtgängig endmontiert werden.

Die Erfindung betrifft auch ein Verfahren gemäß Anspruch 5 zum Befestigen eines Bindeguts mittels unter Verwendung des Befestigungssystems nach Anspruch 1.

Dabei ist die Haltevorrichtung zumindest teilweise, also teilweise oder ganz, bevorzugt überwiegend, aus Kunststoff gefertigt und weist einen Befestigungsfuß zum Befestigen der Haltevorrichtung an der weiteren Komponente sowie einen an dem Befestigungsfuß angeordneten Befestigungskopf mit einem Durchlassbereich zum Durchschieben eines Kabelbinderbandes durch die Haltevorrichtung und zum Halten des Kabelbinders an der Haltevorrichtung auf. Die Haltevorrichtung kann hier entweder vollständig aus Kunststoff gefertigt sein oder zumindest der Befestigungskopf kann vollständig aus Kunststoff gefertigt sein. Der Kabelbinder weist ein verzahntes Kabelbinderband und einen Kabelbinderkopf mit einer Rasteinrichtung zum Verrasten mit dem verzahnten Kabelbinderband bei einem Durchstecken des Kabelbinderbandes durch den Kabelbinderkopf auf.

Das Verfahren umfasst dabei die folgenden Schritte: Ein Befestigen der Haltevorrichtung an der weiteren Komponente. Ein erstes Durchschieben des Kabelbinderbandes durch den Durchlassbereich der Haltevorrichtung. Ein Befestigen des Bindeguts an dem Kabelbinder und somit an der Haltevorrichtung, welches ein Bilden einer Kabelbinderschlaufe um das Bindegut mit einem Durchstecken des Kabelbinderbandes durch den Kabelbinderkopf umfasst. Dabei ist wird das Bindegut hier ausschließlich mit dem Kabelbinder an der Haltevorrichtung gehalten, und zwar beabstandet, also berührungslos. Das ist realisiert, indem der Kabelbinder im Durchlassbereich der Haltevorrichtung durch zumindest zwei unterschiedlich ausgerichtete Führungskulissen mit jeweils zumindest einem Paar von entgegengesetzt orientierten Stützflächen konturgenau aufgenommen wird, wobei durch eine erste Führungskulisse mit zumindest einem ersten Paar an Stützflächen der Kabelbinder in Anlage an Flächenbereichen an Kantenseiten des Kabelbinderkopfes und/oder des Kabelbinderbandes gehalten wird und der Kabelbinderkopf und/oder das Kabelbinderband jeweils zumindest teilweise zwischen den jeweiligen Paaren von Stützflächen einer Führungskulisse angeordnet wird. Insbesondere berührt hier nur die Innenseite des Kabelbinders, beispielsweise in dem Vergleich zum zu innenliegenden Randbereichen der Innenseite erhöhten Mittelteil das Bindegut. Insbesondere kann der Kabelbinder im Durchlassbereich der Haltevorrichtung durch eine zweite Führungskulisse mit zumindest einem zweiten Paar an Stützflächen in Anlage an Flächenbereichen an den innenliegenden Randbereichen des Kabelbinderbandes gehalten werden. Dabei sind die Randbereiche durch einen innenliegenden Mittelbereich getrennt, in welchem der Kabelbinder nicht in Anlage zu der Haltevorrichtung gehalten wird.

In einer vorteilhaften Ausführungsform ist vorgesehen, dass das Binden der Kabelbinderschlaufe um das Bindegut ein zweites Durchschieben des Kabelbinderbandes durch den Durchlassbereich der Haltevorrichtung umfasst.

Die für die Haltevorrichtung, das Befestigungssystem und den Kabelbinder genannten Vorteile und vorteilhaften Ausführungsformen gelten hier entsprechend für das Montageverfahren.

Zur Definition einer formschlüssigen Anlage: Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Bei Betriebsbelastung wirken Druckkräfte normal, das heißt rechtwinklig zu den Flächen der Verbindungspartner. Solche "Sperrungen" kommen in mindestens einer Richtung vor. Ist ein zweites homogenes Flächenpaar gegenüber angeordnet, ist auch die Gegenrichtung gesperrt. Besteht das Paar beispielsweise aus zwei zueinander koaxialen Zylinderflächen, so besteht Formschluss in allen Richtungen der zur Zylinderachse senkrechten Ebene.

Ausführungsbeispiele der Erfindung werden nachfolgend anhand schematischer Zeichnungen näher erläutert. Dabei zeigen:
- Fig. 1: eine perspektivische Ansicht einer ersten Haltevorrichtung;
- Fig. 2: eine weitere perspektivische Ansicht der Haltevorrichtung aus Fig. 1, bei einem Durchschieben eines Kabelbinders durch die Haltevorrichtung;
- Fig. 3: die Haltevorrichtung von Fig. 1 mit einem Kabelbinder in einem endmontierten Zustand ohne Bindegut;
- Fig. 4: eine perspektivische Ansicht einer weiteren Haltevorrichtung;
- Fig. 5: eine weitere perspektivische Ansicht der Haltevorrichtung aus Fig. 4, bei einem Durchschieben eines Kabelbinders durch die Haltevorrichtung;
- Fig. 6: die Haltevorrichtung von Fig. 4 mit einem Kabelbinder in einem endmontierten Zustand ohne Bindegut;
- Fig. 7: eine perspektivische Ansicht einer dritten Haltevorrichtung mit einem Kabelbinder, welcher mit seinem Kabelbinderkopf bis zu einer Endposition durch die Haltevorrichtung hindurchgeschoben ist;
- Fig. 8: eine weitere perspektivische Ansicht des in Fig. 7 Gezeigten;
- Fig. 9: die Haltevorrichtung und den Kabelbinder aus Fig. 7 in einem endmontierten Zustand;
- Fig. 10a-e: verschiedene Seiten und Schnittansichten eines Kabelbinders;
- Fig. 11: eine perspektivische Ansicht eines Kabelbinderkopfes mit einem Kabelbinderband;
- Fig. 12: eine Seitenansicht eines Kabelbinders in einem an eine Haltevorrichtung endmontierten Zustand;
- Fig. 13: eine perspektivische Detailansicht einer Innenfläche eines Kabelbinderbandes mit Weich- und Hartkomponente;
- Fig. 14: eine schematische Ansicht einer Haltevorrichtung mit einem Kabelbinder in einem endmontierten Zustand mit Bindegut;
- Fig. 15: eine perspektivische Ansicht einer Variation der Haltevorrichtung aus Fig. 4;
- Fig. 16: eine perspektivische Ansicht einer weiteren nicht beanspruchten Ausführungsform einer Haltevorrichtung;
- Fig. 17: eine Seitenansicht der Haltevorrichtung von Fig. 16 mit einem zur Schlaufe geschlossenen Kabelbinder;
- Fig. 18: eine perspektivische Ansicht der Haltevorrichtung von Fig. 16 mit einem offenen, in die Haltevorrichtung eingeschobenen Kabelbinder;
- Fig. 19a-e: verschiedene Seiten- und Schnittansichten eines Kabelbinders;
- Fig. 20a-b: eine Schnittansicht eines Kabelbinders mit in den Randbereichen geneigter Innenseite mit jeweiligen Haltevorrichtungen;
- Fig. 21a-c: weitere Schnittansichten von Kabelbinder und Haltevorrichtung;
- Fig. 22: eine perspektivische Ansicht eines Kabelbinders; und
- Fig. 23: eine perspektivische Ansicht des Kabelbinders aus Fig. 22 mit in den Kabelbinderkopf eingestecktem Kabelbinderband.

In den Figuren werden gleiche oder funktionsgleiche Elemente mit den gleichen Bezugszeichen versehen.

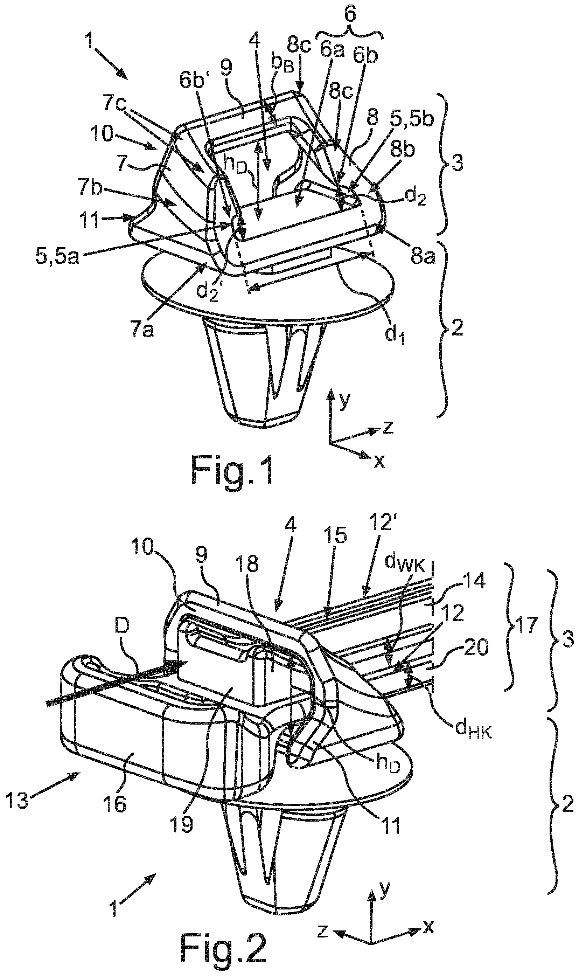

Fig. 1 zeigt eine erste Haltevorrichtung. Vorliegend ist die gezeigte Haltevorrichtung 1 mit einem Befestigungsfuß 2 und einem Befestigungskopf 3 versehen, welche in einer y-Richtung als Hochrichtung übereinander angeordnet sind. Der Befestigungsfuß 2 weist dabei einen Durchlassbereich 4 zum Durchschieben eines Kabelbinderbandes 17 (Fig. 2) eines Kabelbinders 13 (Fig. 2) durch die Haltevorrichtung 1 und zum Halten des Kabelbinders 13 an der Haltevorrichtung 1 auf. Der Durchlassbereich 4 weist dabei zum konturgenauen Aufnehmen des Kabelbinders zumindest zwei unterschiedlich ausgerichtete Führungskulissen 5, 6 mit jeweils zumindest einem Paar von entgegengesetzt orientierten Stützflächen 5a, 5b beziehungsweise 6a, 6b, 6b' auf. Die Stützflächenpaare können jeweils parallel angeordnete Stützflächen 5a, 5b beziehungsweise 6a, 6b, 6b' haben.

Im gezeigten Beispiel weist der Befestigungskopf 3 im Durchlassbereich 4 auch zwei Arme 7 und 8 auf. Diese weisen jeweils einen dem Befestigungsfuß 2 zugewandten Fußbereich 7a, 8a, einen dem Befestigungsfuß 2 abgewandten Endbereich 7c, 8c sowie einen jeweiligen zwischen Fußbereich7a, 8a und Endbereich 7c, 8c liegenden Mittelbereich 7b, 8b auf. Die jeweiligen Mittelbereiche 7b, 8b weisen in diesem Beispiel die einander zugewandten innenliegenden Stützflächen 5a, 5b der ersten Führungskulisse 5 auf.

Im gezeigten Beispiel wird auch durch den Fußbereich 7a, 8a der beiden Arme 7, 8 die erste Stützfläche 6a der zweiten Führungskulisse 6 gebildet oder bereitgestellt. Die erste Stützfläche 6a der zweiten Führungskulisse 6 umfasst also zumindest bereichsweise die beiden Fußbereiche 7a, 8a. Im gezeigten Beispiel ist die erste Stützfläche 6a eben und erstreckt sich in der x-z-Ebene, hier senkrecht zur Hochrichtung oder y-Richtung. Der Normalenvektor der ersten Stützfläche 6a weist also in positiver y-Richtung. In den Endbereichen 8c, 7c der beiden Arme 7, 8 ist im gezeigten Beispiel die jeweilige weitere Stützfläche 6b, 6b' angeordnet oder durch die Arme 7, 8 gebildet. Diese weisen vorliegend einen Normalenvektor auf, welcher in negativer y-Richtung weist. Entsprechend sind die Stützflächen 6a und 6b, 6b' entgegengesetzt orientiert und vorliegend auch gegenüberliegend angeordnet. Zwischen ihnen ist noch ein Freiraum zum Aufnehmen des Kabelbinders 13 vorhanden, sodass beispielsweise in einem endmontierten Zustand ein Bereich des Kabelbinderbandes 17 zwischen den jeweiligen Stützflächen 6a und 6b, 6b' angeordnet ist.

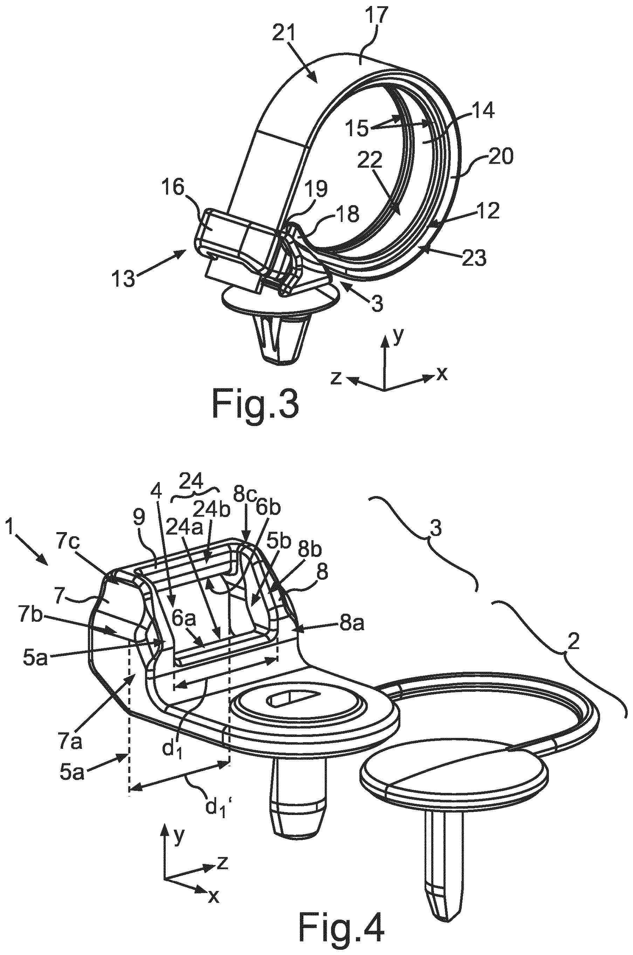

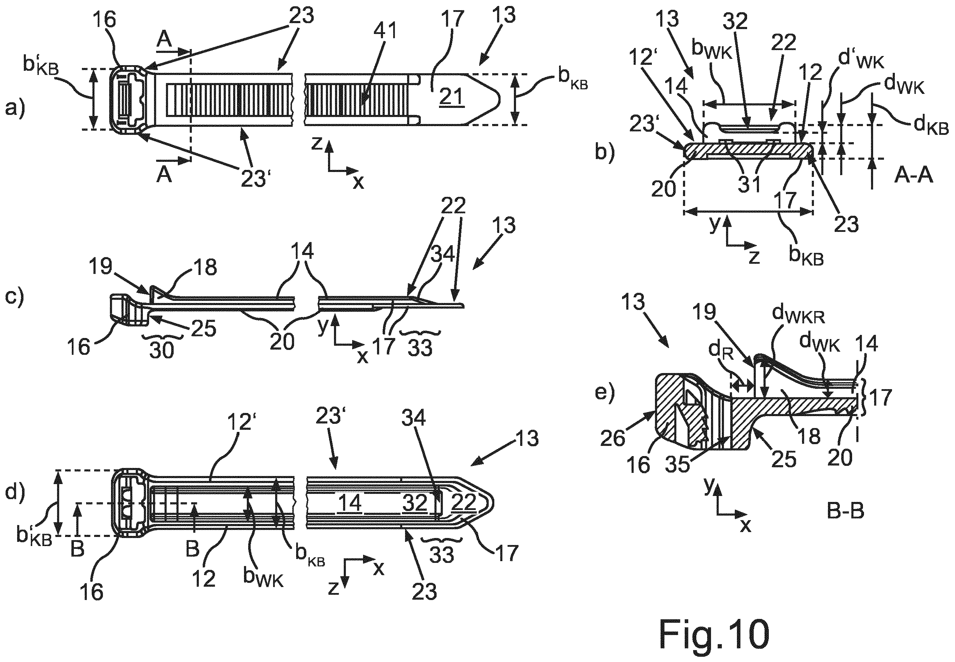

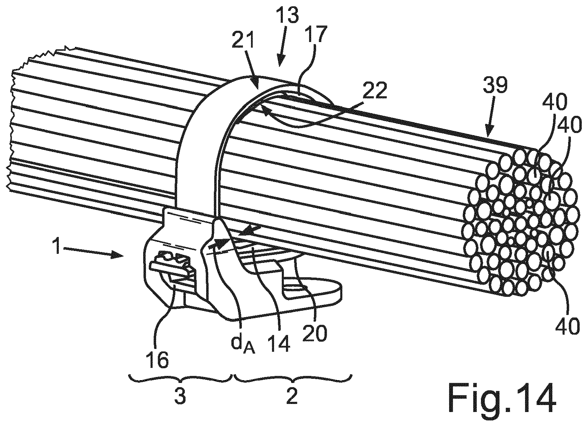

Im gezeigten Beispiel sind die weiteren Stützflächen 6b, 6b' in der x-y-Ebenen gegen die erste Stützfläche 6a der zweiten Führungskulisse 6 verkippt, sodass sich ein in positiver x-Richtung zulaufender Konus oder Trichter ergibt. Dies hat den Effekt, dass bei einem Durchschieben des Kabelbinders 13 durch den Durchlassbereich 4 in die x-Richtung, welche dann als Durchschieberichtung D (Fig. 2) bezeichnet werden kann, der Kabelbinders 13 konturgenau zu der Führungskulisse hin führbar ist. Dabei ist die erste Stützfläche 6a zur Anlage oder zum Führen des Kabelbinders 13, welcher durch den Durchlassbereich 4 geschoben wird, an einer im endmontierten Zustand einem Bindegut 39 (Fig. 14) abgewandten Außenseite 21 (Fig. 3) des Kabelbinders 13 bestimmt und die weiteren Stützflächen 6b, 6b' zur Anlage an jeweilige Randbereiche 12, 12' (Fig. 2) des Kabelbinders 13, welche in einem endmontierten Zustand zu dem Bindegut 39 hin orientiert sind. Diese Randbereiche 12, 12' grenzen dabei an jeweils eine Kantenseite 23, 23' (Fig. 3) des Kabelbinders 13 an und sind durch einen Mittel- oder Zentralbereich an der Innenseite 22 (Fig. 3) des Kabelbinders 13 voneinander getrennt. Ein Abstand d₂ zwischen der ersten Stützfläche 6a und der einen weiteren Stützfläche 6b beziehungsweise d₂' zwischen der ersten Stützfläche 6a und der anderen weiteren Stützfläche 6b' ist somit an eine Dicke d_{KB}(Fig. 10) des Kabelbinders 13, vorliegend in den Randbereichen 12, 12', angepasst, um diesen insbesondere formschlüssig zu führen. Die Dicke d_{KB} des Kabelbinders 13 in den Randbereichen 12, 12' wird dabei in einem endmontierten Zustand in axialer Richtung gemessen.

Die erste Stützflächen 5a der ersten Führungskulisse weist im gezeigten Beispiel einen Normalenvektor auf, welcher in positiver z-Richtung weist, die zweite Stützfläche 5b einen Normalenvektor, welcher in negative z-Richtung weist; sie sind also unterschiedlich, vorliegend entgegengesetzt, orientiert. Hier verlaufen die beiden Stützflächen 5a, 5b parallel jeweils in der y-x-Ebene, sie könnten jedoch auch zum Zwecke eines erleichterten Hinführens gegeneinander geringfügig, also beispielsweise um einen Betrag von weniger als 5, weniger als 10 oder weniger als 15 Grad, geneigt sein. Da sich der Durchlassbereich 4 zwischen den beiden Stützflächen 5a, 5b erstreckt, diese also durch einen Leer- oder Freiraum getrennt sind, ist im endmontierten Zustand der Kabelbinder 13 zwischen den beiden Stützflächen 5a, 5b angeordnet. Vorliegend sind die beiden Stützflächen auch gegenüberliegend. Dabei ist ein Abstand d₁ der beiden Stützflächen 5a, 5b zueinander, insbesondere ein Minimalabstand d₁ der beiden Stützflächen 5a, 5b zueinander, an eine Breite b_{KB}, b_{KB}' (Fig. 10) des durch die Haltevorrichtung 1 zu haltenden Kabelbinders 13 angepasst, insbesondere zur formschlüssigen Anlage der beiden Stützflächen 5a, 5b an den Kantenseiten 23, 23' des Kabelbinders 13.

Vorliegend münden die beiden Führungskulissen 5, 6 auch ineinander, und die jeweiligen Stützflächen 5a, 5b, 6a, 6b, 6b' gehen ineinander über. In einem Querschnitt senkrecht zu den jeweiligen Stützflächen5a, 5b, 6a, 6b, 6b' wird durch diese somit ein bereichsweise deformierter offener Ring gebildet, welcher den Kabelbinder 13 in zwei Translationsachsen führt und entsprechend die Translationsbewegung auf eine verbleibende Translationsrichtung begrenzt.

Die Führungskulissen 5, 6 sind dabei im gezeigten Beispiel um circa 90 Grad zueinander verkippt, wobei sich die Orientierung einer Führungskulisse 5, 6 aus der mittleren Orientierung der zur Führungskulisse 5, 6 gehörigen Stützflächen 5a, 5b, 6a, 6b, 6b' ergibt. Die mittlere Orientierung kann beispielsweise durch ein Subtrahieren der Normalenvektoren der jeweils zu einer Führungskulisse 5, 6 gehörigen Stützflächen 5a, 5b, 6a, 6b, 6b' bestimmt sein.

Im gezeigten Beispiel sind die beiden Arme 7, 8 in ihren Endbereichen 7c, 8c durch eine Brücke 9 verbunden. Dadurch ist im Durchlassbereich 4 ein lochartiger Durchlass gebildet, welcher durch die Stützflächen 5a, 5b, 6a, 6b, 6b' sowie die Brücke 9 begrenzt ist. Dabei kann beispielsweise die Höhe h_{D} des Durchlassbereiches in y-Richtung durch die Brücke 9 auf eine Höhe h_{D} begrenzt werden. Die Höhe h_{D} kann dabei kleiner als und/oder gleich einer maximalen Höhe des Kabelbinderbandes ist, also einer maximalen Dicke d_{D} des Kabelbinderbandes 17 in einer Hochrichtung. Die Hochrichtung ist hier die y-Richtung.

Im gezeigten Beispiel ist auch eine Breite b_{B} der Brücke 9 gezielt vorgegeben. Die Breite b_{B} wird im gezeigten Beispiel parallel zur Durchschieberichtung D, hier der x-Richtung, sowie parallel zu den weiteren Stützflächen 6b, 6b' der zweiten Führungskulisse 6 gemessen. Sie dient dem Verrasten eines in den Durchlassbereich durchzuschiebenden Kabelbinders 13 mit einer entsprechenden Rastfläche 19 (Fig. 2) des Kabelbinderbandes 17 von dessen Innenseite 22. Im Detail geht dies aus Fig. 2 hervor. Die Breite b_{B} entspricht dabei beispielsweise einem Abstand d_{R} (Fig. 10) an dem Kabelbinder 13 zwischen einer dem Kabelbinderband 17 zugewandten Vorderseite 25 (Fig. 10) des Kabelbinderkopfes 16 und einer dem Kabelbinderkopf 16 zugewandten Rastfläche 19 eines Rampe 18 (Fig. 2) als Rastvorsprung des Kabelbinderbandes 17. Die Breite b_{B} kann auch dabei alternativ beispielsweise einem Abstand an dem Kabelbinder 13 zwischen einer Führungsfläche 35 (Fig. 10) im Innern des Kabelbinderkopfes 16 und der dem Kabelbinderkopf 16 zugewandten Rastfläche 19 entsprechen.

Schließlich weist die Haltevorrichtung 1 vorliegend an der Brücke 9 und den Armen 7, 8 auch eine zumindest zu der Durchschieberichtung D im Wesentlichen senkrecht orientierte Anschlagfläche 10 zur Anlage eines Flächenbereichs der dem Kabelbinderband 17 zugewandten Vorderseite 25 des Kabelbinderkopfes 16 auf. Diese Anschlagfläche 10 umfasst vorliegend die Brücke 9 und die Endbereiche 7c, 8c der beiden Arme 7, 8 vollständig und teilweise auch die Mittelbereiche 7b, 8b. In dem befestigungsfußnahen Bereich der Anschlagfläche 10 schließt sich hier eine Leitfläche 11 an, welche zumindest bereichsweise durch den Fußbereich 7a, 8a der beiden Arme 7, 8 gebildet ist. Diese Leitfläche 11 ist im gezeigten Beispiel eben und um die z-Achse geneigt, sodass bei einem Durchschieben in der Durchschieberichtung D der Kabelbinder 13 um die z-Achse rotiert wird, sobald der Kabelbinderkopf 16 in Anlage an die Leitfläche 11 gerät und die innenliegenden Randflächen 12, 12' an die Stützflächen 6b und 6b' gedrückt werden.

Fig. 2 zeigt die Haltevorrichtung von Fig. 1 bei einem Durchschieben eines Kabelbinders 13 durch den Durchlassbereich 4 der Haltevorrichtung 1. Der Kabelbinder 13 weist dabei in diesem Beispiel auf der Innenseite 22 eine Weichkomponente 14 auf. Die Weichkomponente 14 ist als Bandes ausgebildet und bildet eine Anlagefläche 15 für das Bindegut 39. Die Weichkomponente 14 ist an der Innenseite 22 des sich an den Kabelbinderkopf 16 anschließenden Kabelbinderbandes 17 in dem Mittel- oder Zentralbereich zwischen den Randbereichen 12, 12' angebracht. In einem kabelbinderkopfnahen Endbereich des Kabelbinderbandes 17 bildet die Weichkomponente 14 hier eine Rampe 18.

Die Rampe 18 wird dadurch gebildet, dass die Dicke d_{WK} der Weichkomponente 14 in y-Richtung, in Richtung des Kabelbinderkopfes 16 zunimmt. Die Rampe 18 bildet dabei mit dem Ende der Weichkomponente 14 eine Anschlagfläche oder Rastfläche 19, welche zum Kabelbinderkopf 16 hin orientiert ist. Die Dicke d_{HK} der Hartkomponente 20 und die Dicke d_{WK} der Weichkomponente 14 sind im gezeigten Beispiel in einem Bereich der Rampe 18 in Summe größer als die Höhe h_{D} des Durchlassbereiches 4. Dadurch ergibt sich bei einem Durchschieben des Kabelbinders 13 durch den Durchlassbereich 4 bei einem Annähern des Kabelbinderkopfes 16 an die Haltevorrichtung 1 ein geringfügiger Widerstand, welcher zu überwinden ist, bis die Rastfläche 19 der Rampe 18 mit der Brücke 9 verrastet.

Bei dem Andrücken und Einrasten des Kabelbinders 13 mit der Haltevorrichtung 1 bewirkt nun in diesem Beispiel die schräg gestellte Leitfläche 11, dass der Kabelbinderkopf 16 in positiver y-Richtung an die Brücke 9 gedrückt wird, sodass die Verrastung der Brücke 9 mit der Rampe 18 gesichert ist. Überdies wird so der Randbereich 12, 12' an die Stützflächen 6b' und 6b gepresst.

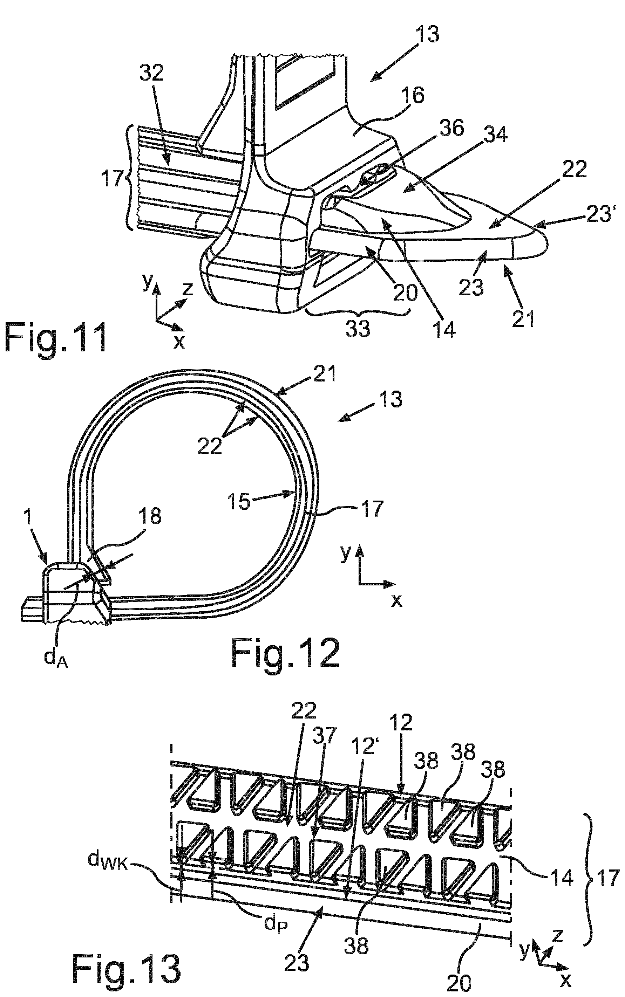

In Fig. 3 ist nun die Haltevorrichtung 1 aus Fig. 1 mit dem Kabelbinder 13 aus Fig. 2 in einem endmontierten Zustand zu sehen. Dabei ist der Kabelbinder 13 durch den Durchlass oder Durchlassbereich 4 durchgeschoben, bis der Kabelbinderkopf 16 und die Rampe 18 mit der Rastfläche 19 verrastet ist. Dabei ist das Kabelbinderband 17 durch den Kabelbinderkopf 16 hindurchgesteckt und mit diesem verrastet. Eine Verzahnung des Kabelbinderbandes 17, welche vorliegend an der Außenseite 21 des Kabelbinderbandes 17 zu erwarten wäre, ist hier aus Gründen der Übersichtlichkeit nicht dargestellt. Des Weiteren sind hier neben der Weichkomponente 14 und der Hartkomponente 20 des Kabelbinderbinders 13 auch dessen Innenseite 22 sowie die Randbereiche 12 der Innenseite und die Kantenseiten 23 gezeigt. Im diesem Beispiel würde sich nun ein Bindegut 39 in z-Richtung durch die von dem Kabelbinder 13 gebildete Schlaufe erstrecken. Dabei würde das Bindegut in Anlage an die hier von der Weichkomponente 14 gebildete Anlagefläche 15 von der restlichen Innenfläche 22, insbesondere den Randbereichen 12, 12' beabstandet gehalten. Das Bindegut 39 wäre damit sowohl der Hartkomponente 20 des Kabelbinders 13 als auch der Haltevorrichtung 1 in einem vorgegebenen Abstand gehalten werden. Entscheidend für das berührungsfreie Halten von im Abstand d_{A} (Figs. 12, 14) zu der Haltevorrichtung 1 ist im gezeigten Beispiel die Rampe 18.

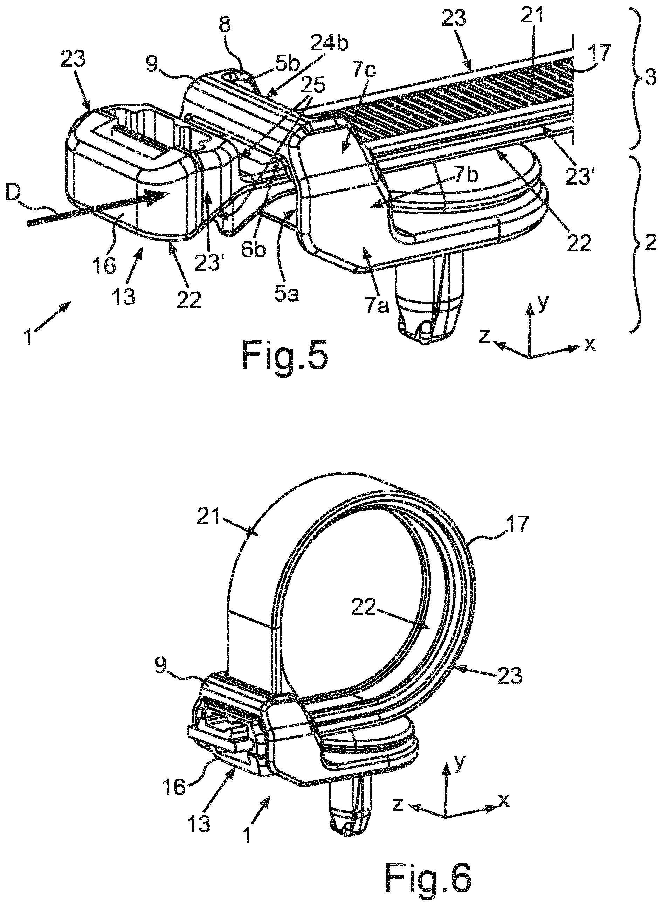

Fig. 4 zeigt nun eine andere Haltevorrichtung 1. Wie bei der in Fig. 1 bis 3 gezeigten Haltevorrichtung 1 weist die vorliegende Haltevorrichtung 1 einen Befestigungskopf 3 mit zwei Armen 7, 8 sowie einer Brücke 9 auf, welche die Arme 7, 8 in einem einem Befestigungsfuß 2 abgewandten Endbereich 7c, 8c verbindet. Dadurch wird einerseits ein lochartiger Durchlassbereich 4 geschaffen, zugleich aber auch eine käfigartige Struktur für den Kabelbinderkopf 16 (Fig. 5) bereitgestellt.

Wie bereits aus dem letzten Ausführungsbeispiel bekannt, sind auch hier die Stützflächen 5a, 5b der ersten Führungskulisse 5 an innenliegenden Seitenflächen der Arme 7, 8 vorhanden. Sie sind im gezeigten Beispiel eben ausgeführt und erstrecken sich jeweils in der x-y-Ebene entlang der Arme 7, 8 von dem Mittelbereich 7b, 8b bis zu dem Endbereich 7c, 8c hin. Wie aus dem letzten Ausführungsbeispiel bekannt, gehen die beiden Stützflächen 5a, 5b der ersten Führungskulisse 5 in dem dem Befestigungsfuß 2 zugewandten Bereich der Stützflüchen 5a, 5b in die eine Stützfläche 6a der zweiten Führungskulisse 6 über. Auch hier, also in diesem Beispiel, sind die beiden Stützflächen 5a, 5b zur Anlage an Kantenseiten 23, 23' eines durch die Durchlassöffnung 4 zu schiebenden Kabelbinders 13 bestimmt.

Die eine Stützfläche 6a der zweiten Führungskulisse 6 weist hier eine positive y-Richtung zeigenden Normalenvektor auf, im gezeigten Beispiel ist allerdings die korrespondierende weitere Stützfläche 6b der zweiten Führungskulisse 6 zwar entgegengesetzt orientiert mit einem entsprechenden in negative y-Richtung zeigenden Normalenvektor. In x-Richtung liegen die Stützflächen 6a, 6b hier jedoch versetzt. Dies bewirkt, dass in einem endmontierten Zustand, wie er beispielsweise in Fig. 6 gezeigt ist, die eine Stützfläche 6a mit der Außenseite 21 des Kabelbinders 13 in Anlage angeordnet ist und die weitere Stützfläche 6b mit einer dem Kabelbinderband 17 zugewandten Vorderseite 25 des Kabelbinderkopfes 16. Damit ergibt sich eine besonders vorteilhaftes und stabiles Halten des Kabelbinders 13.

Des Weiteren weist nun die gezeigte Ausführungsform eine dritte Führungskulisse 24 mit entgegengesetzt orientierten, hier parallelen Stützflächen 24a, 24b auf. Auch diese Stützflächen 24a, 24b sind im gezeigten Beispiel gegeneinander versetzt, und zwar vorliegend in y-Richtung. Die eine Stützfläche 24a der dritten Führungskulisse 24 ist dabei in negativer x-Richtung orientiert und schließt sich in diesem Beispiel an die eine Stützfläche 6a der zweiten Führungskulisse 6 an, und/oder die Stützfläche 6a geht in die Stützfläche 24a über. Die Stützfläche 24a ist dabei zumindest bereichsweise durch den Fußbereich 7a und 8a der beiden Arme 7, 8 gebildet und/oder schließt sich an den Fußbereich 7a und 8a an. Die weitere Stützfläche 24b, welche in positiver x-Richtung orientiert ist, wird im gezeigten Beispiel durch die Brücke 9 gebildet und geht in die Endbereiche 7c, 8c der Arme 7, 8 und/oder die Stützflächen 5a, 5b der ersten Führungskulisse 5 über. Es wird somit durch die Führungskulissen 5, 6, 24 ein stabiler Käfig gebildet, in welchem der Kabelbinder 13 im Bereich des Kabelbinderkopfes 16 zuverlässig gehalten wird. Die jeweiligen Führungskulissen 5, 6, 24 sind mit ihren Stützflächen 5a, 5b, 6a, 6b, 24a, 24b im gezeigten Beispiel hier jeweils sämtlich senkrecht oder im Wesentlichen senkrecht zueinander orientiert. Sie können auch in einem anderen Winkel zwischen 75 und 105 Grad, bevorzugt zwischen 85 und 95 Grad zueinander angeordnet sein. Bei der im Wesentlichen senkrechten Orientierung zueinander ergibt sich der Vorteil einer besonders guten Führung des Kabelbinders 13 in der käfigartigen Haltevorrichtung 1.

Fig. 5 zeigt nun die Haltevorrichtung 1 aus Fig. 4 mit einem in Durchschieberichtung D teilweise durch den Durchlassbereich 4 durchgeschobenen Kabelbinder 13. Hierbei ist der Kabelbinder 13 wieder in einer beispielhaften Ausführungsform gezeigt. Bei der gezeigten Variante wird in der gezeigten Art des Durchschiebens der Kabelbinder 13 in positiver x-Richtung mit in positiver y-Richtung orientierter Außenseite 21 durch den Durchlassbereich 4 geschoben. Dabei wird er an den Kantenseiten 23, 23' des Kabelbandes durch die erste Führungskulisse 5 beziehungsweise deren Stützflächen 5a, 5b in z-Richtung in seiner Bewegung eingeschränkt. Die zweite Führungskulisse 6 kann hier ebenfalls bereits eine Bewegung des Kabelbinders 13 in y-Richtung einschränken, allerdings ist dies nicht erforderlich, da ins diesem Beispiel, wie anhand von Fig. 6 weiterhin erklärt wird, die Stützflächen 6a, 6b nicht nur wie im in den Figs. 1 bis 3 gezeigten Ausführungsbeispiel an einer Abmessung des Kabelbinderbandes 17, sondern vielmehr des Kabelbinders 13 insgesamt angepasst sind. Die dritte Führungskulisse 24 mit den beiden Stützflächen 24a, 24b bleibt bei dem Durchführen des Kabelbinders 13 in der gezeigten Durchschieberichtung D zunächst ohne Funktion.

Ist der Kabelbinder 13 nun in den Durchlassbereich 4 eingeschoben, beispielsweise bis die Vorderseite 25 des Kabelbinderkopfes 16 an die Brücke 9 stößt oder in deren Nähe gerät, so ist der Kabelbinder 13, dessen Innenseite 22 ja noch in Richtung des Befestigungsfußes 2 orientiert ist, um die z-Achse zu rotieren, um den vorgesehenen endmontierten Zustand zu erreichen. Dieser endmontierte Zustand ist in Fig. 6 dargestellt.

Alternativ zu dem gezeigten Durchschieben in einer Durchschieberichtung D in positiver x-Richtung kann auch ein Durchschieben in positiver y-Richtung vorgesehen sein. Dadurch entfällt die spätere Notwendigkeit der Rotation der Rotation des Kabelbinders 13. Ein Durchschieben in positiver x-Richtung hat jedoch den Vorteil, dass der Kabelbinder 13 auch unter beengten Verhältnissen, beispielsweise wenn der Durchlassbereich 4 bereits sehr nah an einer großen Komponente, welche sich in x-z-Richtung erstreckt, zum Beispiel an einem Blech, angebracht ist, auch nachträglich einfach montiert und demontiert werden kann, da so der Raumbedarf in y-Richtung minimiert ist.

Die Stützflächen 5a, 5b sind im vorliegenden Beispiel sowohl zur Anlage an die Kantenseiten 23, 23' des Kabelbinderbandes 17 als auch zur Anlage an die Kantenseiten 23, 23' des Kabelbinderkopfes 16 ausgelegt. Entsprechend ist der Abstand d₁ der Stützflächen 5a, 5b in einem ersten, im endmontierten Zustand dem Bindegut 39 näheren Bereich geringer als der Abstand d₁' in einem zweiten, dem Bindegut 39 weiter entfernteren Abschnitt der Stützflächen 5a, 5b. Die Stützflächen 5a, 5b sind somit in dem Bereich mit dem kleineren Abstand d₁ zur Anlage an das Kabelbinderband 17 ausgelegt und in dem Bereich mit dem größeren Abstand d₁' zur Anlage an den Kabelbinderkopf 16 beziehungsweise an die Kantenseiten 23, 23' des Kabelbinderkopfes 16. Dabei können die Seitenflächen 5a, 5b auch an eine Kopfgeometrie des Kabelbinders 13 angepasst sein, um eine verbesserte Fixierung zu erreichen.

In Fig. 6 ist die beschriebene Haltevorrichtung 1 im endmontierten Zustand und ein Kabelbinder 13 ohne Bindegut 39 dargestellt. Dabei befindet sich der Kabelbinderkopf 16 in einer Endposition und ist bereichsweise von der Haltevorrichtung 1 wie von einem Käfig umgeben. Dabei sind die Kantenseiten 23, 23' des Kabelbinderkopfes 16 in Anlage an die Stützflächen 5a, 5b der ersten Führungskulisse 5, die eine Stützfläche 24a der dritten Führungskulisse 24 in Anlage an die Innenseite 22 des Kabelbinderkopfes 16, sowie die weitere Stützfläche 24b der dritten Führungskulisse 24 in Anlage an die Außenfläche 21 des Kabelbinderbandes 17 in einem an den Kabelbinderkopf 16 angrenzenden Bereich. Die eine Stützfläche 6a der zweiten Führungskulisse 6 ist hier in Anlage mit der Außenseite 21 des Kabelbinderbandes 17 in einem Bereich angeordnet, welcher durch das Durchstecken des Kabelbinderbandes 17 durch den Kabelbinderkopf 16 in die Nähe des Kabelbinderkopfes 16 gelangt. Die weitere Stützfläche 6b der zweiten Führungskulisse 6 ist dabei in Anlage mit der Vorderseite 25 des Kabelbinderkopfes 16 angeordnet. Die Außenseite 21 des Kabelbinderbandes 17 ist dabei durch die Außenseite in einem nicht endmontierten Zustand des Kabelbinders 13 bestimmt. Die Stützflächen 5a, 5b, 6a, 6b, 24a, 24b sind im gezeigten Beispiel konturgenau, bevorzugt formschlüssig, an den zugeordneten Seiten beziehungsweise Flächen des Kabelbinders 13 angeordnet.

Der gezeigte endmontierte Zustand wird also in diesem Beispiel dadurch erreicht, dass der Kabelbinder 13 zunächst in einer ersten Richtung, der Durchschieberichtung D, welche die x-Richtung oder auch die y-Richtung sein kann, durch den Durchlassbereich 4 der Haltevorrichtung 1 geschoben wird. Falls die Durchschieberichtung D nicht der Positionierung des Kabelbinderkopfes 16 in der Endposition entspricht, also vorliegend die Durchschieberichtung D nicht die y-Richtung ist, wird zu einem späteren Zeitpunkt wird der Kabelbinder 13 um die z-Achse rotiert. Dadurch weist dann das Kabelbinderband 17 in positiver y-Richtung. Es wird sodann eine Schlaufe um das hier nicht dargestellte Bindegut 39 gebildet, indem das Kabelbinderband 17 durch den Kabelbinderkopf 16 durchgesteckt und in diesem verrastet wird. Bei diesem Durchstecken des Kabelbinderbandes 17 durch den Kabelbinderkopf 16 wird das Kabelbinderband 17 auch ein zweites Mal durch den Durchlassbereich 4 geschoben. Die entsprechende zweite Durchschieberichtung, die durch das zweite Durchschieben bestimmt ist, ist hier von der ersten Durchschieberichtung verschieden und kann dabei zu der ersten Durchschieberichtung entgegengesetzt sein.

Insgesamt kommen so die Stützflächen 6a, 6b, 24a, 24b der zweiten und dritten Führungskulisse 6, 24 an zwei diagonal entgegengesetzten Ecken oder Winkelbereichen, welche sich an dem durch das Durchstecken des Kabelbinderbandes 17 durch den Kabelbinderkopf 16 gebildeten Kreuzungsbereich ergeben, zur Anlage und fixieren somit den Kabelbinder 13 in y- und x-Richtung auf elegante Weise. Einem Verschieben in z-Richtung wird dabei durch die erste Führungskulisse vorgebeugt. Insgesamt wirken somit die Brücke 9 mit den Stützflächen 24b und 6b sowie der Befestigungskopf 3 mit den Fußbereichen 7a, 8a der beiden Arme 7, 8 wie ein Käfig, in welchem sich der Kabelbinder 13 durch Schließen der Schlaufe verklemmt.

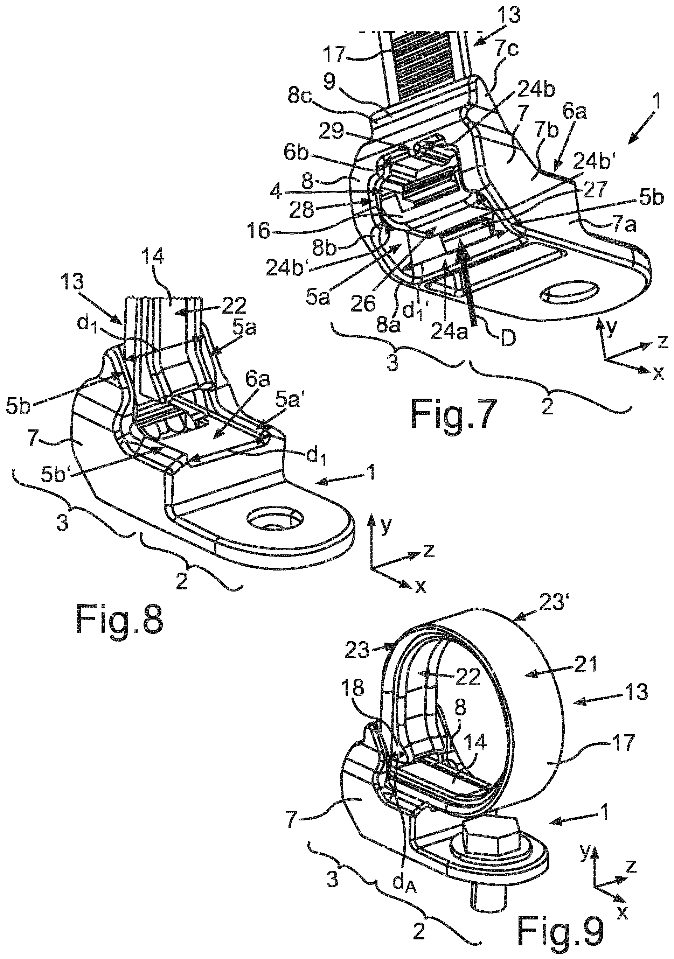

Fig. 7 zeigt eine perspektivische Ansicht einer weiteren Ausführungsvariante einer Haltevorrichtung 1, hier mit einem bereits bis in eine Endposition des Kabelbinderkopfes 16 im endmontierten Zustand eingeschobenen Kabelbinder 13. Wie bereits im letzten beschriebenen Beispiel weist die Haltevorrichtung 1 hier Stützflächen 5a, 5b der ersten Führungskulisse 5 auf, welche hier parallel zueinander entgegengesetzt orientiert angeordnet sind und zur Anlage an Kantenseiten 23, 23' des Kabelbinderbandes 17 und des Kabelbinderkopfes 16 ausgelegt sind. Zu diesem Zweck sind die Stützflächen 5a, 5b in unterschiedlichen Abständen d₁, d₁ ' angeordnet, da Kabelbinderkopf 16 und Kabelbinderband 17 hier eine voneinander verschiedene Breite b_{KB} b_{KB}' aufweisen. Auch hier ist somit der Abstand d₁' im Bereich der Seitenflächen 5a, 5b, welche zur Anlage an Kantenseiten 23, 23' des Kabelbinderkopfes 16 ausgelegt sind, größer als der Abstand d₁ der Stützflächen 5a, 5b in dem Bereich, in welchem die Stützflächen 5a, 5b zur Anlage an Kantenseiten 23, 23' des Kabelbinderbandes 17 bestimmt sind. Auch hier ist die erste Führungskulisse 5 in der z-Richtung orientiert beziehungsweise angeordnet.

Die Stützflächen 6a, 6b der zweiten Führungskulisse 6 sind vorliegend durch die Haltevorrichtung 1 beziehungsweise den Kabelbinderkopf 16 verdeckt. Sie sind jedoch vorliegend jeweils in der z-x-Ebene gelegen, die eine Stützfläche 6a in positiver y-Richtung, die weitere Stützfläche 6b in negativer y-Richtung orientiert. Die weitere Stützfläche 6b ist dabei in der gezeigten Endposition des Kabelbinderkopfes 16 in Anlage an die Vorderseite 25 (Fig. 10) des Kabelbinderkopfes 16 angeordnet. Damit begrenzt die weitere Stützfläche 6b der zweiten Führungskulisse 6 eine Bewegung des Kabelbinders 13 in der Durchschieberichtung D, vorliegend der positiven y-Richtung.

Die dritte Führungskulisse 24 ist vorliegend in x-Richtung orientiert, wobei die eine Stützfläche 24a zur Anlage an die Innenseite 22 des Kabelbinderkopfes 16 ausgelegt ist und die weitere Stützfläche 24b zur Anlage an eine Außenseite 21 des Kabelbinderkopfes 16. Die dritte Führungskulisse 24 verhindert somit ein translatorisches Verschieben des Kabelbinders 13 beziehungsweise Kabelbinderkopfes 16 in die z-Richtung.

Wieder wird hier durch die Führungskulissen 5, 6, 24 im Durchlassbereich 4 eine lochartige Öffnung geformt, welche durch die Stützflächen 5a, 5b, 6a, 6b, 24a, 24b begrenzt ist.

Vorliegend stehen die Stützflächenpaare 5a, 5b, 6a, 6b, 24a, 24b im Wesentlichen senkrecht zueinander. Dabei geht die eine Stützfläche 5a der ersten Führungskulisse 5 in (hier positiver) x-Richtung in die eine Stützfläche 24a der dritten Führungskulisse 24 über und im gezeigten Beispiel in (hier negativer) z-Richtung in die weitere Stützfläche 24b beziehungsweise den Bereich 24b' der Stützfläche 24b, welcher hier der einen Stützfläche 24a der dritten Führungskulisse 24 direkt, also nicht versetzt, gegenüberliegend angeordnet ist. Analog geht auch die weitere Stützfläche 5b der ersten Führungskulisse 5 in ihrem in (hier positiver) x-Richtung gelegenen Bereich in die eine Stützfläche 24a der dritten Führungskulisse 24 über und in (hier negativer) z-Richtung in den Abschnitt 24b' der weiteren Stützfläche 24b der dritten Führungskulisse 24, welcher der einen Stützfläche 24a direkt gegenüber angeordnet ist. Der Abschnitt 24b' der weiteren Stützfläche 24b ist vorliegend an einem Umgriff 28 angeordnet, welcher den Kabelbinderkopf 16 in (hier negativer) x-Richtung umgreift und diesen so nochmals in der Endposition in x-Richtung fixiert. Der Umgriff 28 ist hier im Bereich 24b' der weiteren Stützfläche 24b der dritten Führungskulisse 24 durch die beiden Arme 7, 8 gebildet. Die Stützflächen 5a, 5b, 24a, 24b bilden somit im gezeigten Beispiel einen Schacht, der sich in y-Richtung erstreckt und in welchem der Kabelbinder 13 mit Kabelbinderband 17 und Kabelbinderkopf 16 eingeschoben wird. Dabei weist der Schacht eine Innenkontur auf, welche komplementär zur Außenkontur des Kabelbinderkopfes 16 ist. So kann der Kabelbinderkopf 16 in den Schacht versenkt aufgenommen werden.

Die Stützflächen 5a, 5b sowie 24b gehen vorliegend jeweils beide in (hier positiver) y-Richtung in die weitere Stützfläche 6b der zweiten Führungskulisse über, sodass der eben beschriebene Schacht in y-Richtung abgeschlossen ist. Damit kann der Kabelbinder 13 ausschließlich in y-Richtung in den Schacht eingeführt werden, bis er am Ende des Schachtes an der Stützfläche 6b mit der Vorderseite 25 des Kabelbinderkopfes 16 zum Anschlag kommt. Der Kabelbinderkopf 16 ist dann vorliegend versenkt in den Schacht aufgenommen. Dabei kann an einer Innenseite des Schachtes, beispielsweise an der einen Stützfläche 24a der dritten Führungskulisse 24, ein zusätzliches Rastelement 27 angebracht sein, mittels welchem der Kabelbinderkopf 16 in der gezeigten Endposition verrastbar ist.

Der Durchlassbereich 4 kann dabei in einem Rand, insbesondere an einem Randbereich, welcher durch die Brücke 9 gebildet wird, einen Vorsprung 29 oder eine Nase aufweisen, welche insbesondere einen solchen Vorsprung oder eine solche Nase, welche sich an einer Innenseite des Kabelbinderkopfes 16 in der gezeigten Endposition in z-Richtung erstreckt, fortführt, aufweisen. Dies dient der Stabilisierung und verbesserten Führung des Kabelbinderbandes 17 durch den Durchlassbereich 4.

Fig. 8 zeigt eine weitere perspektivische Darstellung des in Fig. 7 Gezeigten aus einer anderen Perspektive. So ist nunmehr die Innenseite 22 des Kabelbinders 13 mit der Weichkomponente 14 gezeigt. Überdies ist nunmehr auch die eine Stützfläche 6a der zweiten Führungskulisse 6 nicht mehr durch die Haltevorrichtung 1 verdeckt. Auch weisen die Stützflächen 5a, 5b Bereiche 5a' und 5b' auf, welche mit einem Abstand d₁ voneinander beabstandet sind und zur Führung und zum Halten des Kabelbinderbandes 17 in der z-Richtung vorgesehen sind. Im gezeigten Beispiel sind die Stützflächen 5a, 5b jeweils von L-förmig.

In Fig. 9 ist nunmehr die oben beschriebene Haltevorrichtung 1 mit einem Kabelbinder 13 im endmontierten Zustand ohne Bindegut 39 dargestellt. Fig. 9 zeigt, dass der endmontierte Zustand erneut durch ein zweimaliges Durchschieben des Kabelbinders 13 durch den Durchlassbereich 4 der Haltevorrichtung 1 erreicht wird. Das zweite Durchschieben durch den Durchlassbereich 4 erfolgt hier gleichzeitig mit dem Durchschieben des Kabelbinderbandes 17 durch den Kabelbinderkopf 16, welcher vorliegend durch die Haltevorrichtung 1 verdeckt ist. Dadurch, dass ein in einem herstellungsbedingten Ausgangszustand von dem Kabelbinderkopf 16 entfernt angeordneter Bereich des Kabelbinderbandes 17 bei dem zweiten Durchschieben mit der Stützfläche 6a in Anlage gerät und das Kabelbinderband 17 sodann durch den Kabelbinderkopf 16 geschoben wird, wird selbst ohne zusätzliche Rastelement 27 ein Zurückrutschen des Kabelbinderkopfes 16 in negativer y-Richtung verhindert. Ein Bewegen des Kabelbinderkopfes 16 in die anderen Richtungen ist durch den oben beschriebenen Schacht beziehungsweise durch die käfigartige Struktur des Durchgangsbereiches 4 verhindert. Dabei tragen die an die Außenkontur des Kabelbinderkopfes 16 angepasste Innenkontur und der an die Breite b_{KB} des Kabelbinderbandes 17 angepasste Abstand d₁ der Stützflächen 5a, 5b zu einem stabilen Halten des Kabelbinders 13 in der Haltevorrichtung 1 bei.

Erneut wird also durch die Haltevorrichtung 1 in zwei sich diagonal gegenüberliegenden Ecken oder Winkelbereichen, welche durch das Durchführen des Kabelbinders 13 durch sich selbst in einem Kreuzungsbereich erzeugt werden, der Kabelbinder 13 bei einer Befestigung des Bindeguts 39 an der Innenseite 22 des Kabelbinders 13 in dem Durchlassbereich 4 mit der Haltevorrichtung 1 verklemmt. Dabei verhindern die Stützflächen 5a, 5b der ersten Führungskulisse 5 ein Verrutschen des Kabelbinders 13 in z-Richtung, die Stützflächen 6a, 6b der zweiten Führungskulisse ein Bewegen des Kabelbinders 13 in y-Richtung und die Stützflächen 24a, 24b der dritten Führungskulisse 24 ein Bewegen des Kabelbinders 13 in x-Richtung. Durch die vorliegend durch die Weichkomponente 14 gebildete Rampe 18 im kabelbinderkopfnahen Bereich des Kabelbinderbandes 17 wird hier sichergestellt, dass ein Abstand d_{A} des Bindegutes 39 einen vorgegebenen Mindestabstand zu der Haltevorrichtung 1 nicht unterschreitet.

In den Fig. 10a-d ist ein Kabelbinder 13 in unterschiedlichen Seiten- und Schnittansichten dargestellt.

So zeigt die Fig. 10a einen Kabelbinder 13 mit Kabelbinderkopf 16 und Kabelbinderband 17, welches sich mit einer Längsrichtung als Haupterstreckungsrichtung in x-Richtung erstreckt. Quer dazu weist das Kabelbinderband 17 eine Breite b_{KB} in z-Richtung auf. Dargestellt ist hier neben der Verzahnung 29, die hier beispielsweise an der Außenseite 21 angeordnet ist, auch, dass die Breite b_{KB} des Kabelbinderbandes 17 geringer ist als die Breite b_{KB}' des Kabelbinderkopfes 16. Diese Breiten b_{KB}, b_{KB}' sind vorteilhafterweise an die Abstände d₁, d₁' der Stützflächen 5a, 5b (Fig. 1 bis 9) angepasst.

In Fig. 10b ist ein Querschnitt in der in Fig. 10a mit A-A gekennzeichneten Schnittachse dargestellt. Im gezeigten Beispiel ist somit ein Querschnitt durch das Kabelbinderband 17 des Kabelbinders 13 in einer y-z-Ebene zu sehen. Die Weichkomponente 14 ist hier in Form eines Bandes an der Innenseite 22 des Kabelbinders 13 beziehungsweise Kabelbinderbandes 17 angeordnet. Dabei ist die Breite b_{WK} der Weichkomponente 14 geringer als die Breite b_{KB} des Kabelbinderbandes 17, welche durch die Hartkomponente 20 bestimmt wird.

An der Hartkomponente 20 sind innenseitig vorliegend zwei Kopplungselemente 31 dargestellt, welche die Haftung der Weichkomponente 14 an der Hartkomponente 20 erhöhen. Die Innenseite 22 des Kabelbinderbandes 17 ist somit in einem Mittelbereich durch die Weichkomponente 14 und in jeweiligen Randbereichen 12, 12' welche sich an die Kantenseiten 23, 23' anschließen, durch die Hartkomponente 20 gebildet.

Die Weichkomponente 14 ist vorliegend in einem Zentralbereich mit einer ersten Dicke d_{WK}' und in jeweiligen, den Randbereichen 12, 12' zugewandten Bereichen mit einer anderen Dicke d_{WK} versehen. Die Dicke d_{WK}' ist vorliegend geringer als die Dicke d_{WK}. Damit wird an der Innenseite durch die Weichkomponente eine Nut 32 gebildet. Im gezeigten Beispiel beträgt die Dicke d_{WK} zwischen 45% und 55% der Dicke d_{KB} des Kabelbinderbandes.

In Fig. 10c ist der Kabelbinder 13 in einer Breitenansicht dargestellt. Deutlich zu erkennen ist hier, dass der Kabelbinder 13 eine Weichkomponente 14 und eine Hartkomponente 20 umfasst, wobei die Weichkomponente 14 weicher als die Hartkomponente 20 ist. Die Weichkomponente 14 ist hier in Form eines Bandes auf einer Innenseite 22 des Kabelbinders 13, genauer des Kabelbinderbandes 17, angebracht beziehungsweise bildet diese Innenseite 22 bereichsweise.

In einem kabelbinderkopfnahen ersten Endbereich 30 des Kabelbinderbandes 17 wird in diesem Beispiel durch die Erhöhung der Dicken d_{WK},d_{WK}' der Weichkomponente 14 zum Kabelbinderkopf 16 hin eine Rampe 18 gebildet. Zum Kabelbinderkopf 16 hin weist diese Rampe 18 eine Anschlag- oder Rastfläche 19 auf, welche im gezeigten Beispiel senkrecht oder im Wesentlichen senkrecht zur x-Richtung und damit Längsrichtung des Kabelbinders 13 orientiert ist. Dies ist nochmals genauer in der Fig. 10e dargestellt.

In einem dem Kabelbinderkopf 16 ferneren zweiten Endbereich 33 umfasst die Weichkomponente vorliegend eine Schwelle 34. Diese Schwelle 34 ist hier dadurch gebildet, dass die Dicke d_{WK} beziehungsweise d_{WK}' zum Ende des Kabelbinderbandes 17 hin zunächst zunimmt, um sodann auf Null zurückzugehen. Dies ist auch in Fig. 11 nochmals genauer ersichtlich.

Fig. 10d zeigt nun eine Draufsicht auf eine Innenseite des Kabelbinders 13. Zu sehen ist hier, dass sich die Weichkomponente 14 entlang dem Kabelbinderband 17 bandartig in Längsrichtung des Kabelbinders 13, also in x-Richtung, erstreckt. Dabei bildet die Weichkomponente 14 vorliegend innenseitig eine Anlagefläche 15 für ein Bindegut 39. Die Breite b_{WK} ist hier ersichtlich geringer als die Breite b_{KB}' des Kabelbinderbandes 17.

Dadurch sind die Seitenbereiche 12, 12' ebenfalls dargestellt. In dem zweiten Endbereich 33 geht die Nut 32 hier in die Schwelle 34 über.

In Fig. 10e ist ein Querschnitt in Längsrichtung in der x-y-Ebene durch die in Fig. 10d mit B-B gekennzeichnete Schnittachse gezeigt. Dabei steigert sich die Dicke d_{WK} der Weichkomponente 14 im Bereich der Rampe 18 zu der Maximaldicke d_{WKR}. Die Maximaldicke d_{WKR} kann ein Vielfaches der Dicke d_{WK} der Weichkomponente 14 in einem rampenfernen Bereich aufweisen, beispielsweise den 2,5-fachen Betrag.

In Richtung des Kabelbinderkopfes 16 bildet der Rampe hier eine Rastfläche 19. Diese ist in einem Abstand d_{R} zu einer Innenseite 35 der Rasteinrichtung im Kabelbinderkopf 16 angeordnet, an welcher in einem verrasteten Zustand des Kabelbinderbandes 17 mit dem Kabelbinderkopf 16 die Innenseite 22 des Kabelbinderbandes 17 zur Anlage kommt. Dieser Abstand d_{R} ist vorteilhafterweise beispielsweise an die Breite b_{B} der Brücke 9 (Fig. 1) angepasst, um ein sicheres Verrasten des Kabelbinders 13 in der Haltevorrichtung 1 zu erreichen.

In Fig. 11 ist eine perspektivische Ansicht eines Kabelbinders 13 mit einem in einem vorinstallierten Zustand durch den Kabelbinderkopf 16 teilweise durchgeschobenen Kabelbinderband 17 zu sehen. Dabei weist der Kabelbinderkopf 16 in einer Öffnung zum Durchstecken des Kabelbinderbands 17 einen Vorsprung 36 auf, welcher zu einer durch den Kabelbinderkopf 16 durchgesteckten Innenseite 22 des Kabelbinderbandes 17 hin orientierten Vorsprung 36 ist und welcher in die Nut 32 an der Innenseite der Weichkomponente 14 eingreift. Vorliegend ist in dem Endbereich 33 des Kabelbinderbandes 17 durch die Weichkomponente 14 somit eine Schwelle 34 gebildet. Befindet sich das Kabelbinderband 17 in dem gezeigten vormontierten Zustand, so ist das Herausziehen des Kabelbinderbandes 17 aus dem Kabelbinderkopf 16 erschwert, da der Vorsprung 36 in der Nut 32 über die Schwelle 34 nur gezogen werden kann, indem die Weichkomponente 14 im Bereich der Schwelle 34 verformt wird. In diesem vormontierten Zustand ist somit ein selbstständiges, ungewolltes Lösen der provisorischen Kopplung des Kabelbinderbandes 17 mit dem Kabelbinderkopf 16 erschwert oder verhindert.

Der Vorsprung 36 kann auch unabhängig von der Nut 32 vorhanden sein. Der Vorsprung kann in negativer y-Richtung so weit vorspringen, dass er die Weichkomponente 14 der durch den Kabelbinderkopf 16 durchgeschobenen Kabelbinderbandes 17 auch in negativer x-Richtung hinter der Schwelle 34 verformt. Damit wird die Verformung des Kabelbinderbandes 17 bei einer Zugbelastung durch eine verbesserte Abstützung des Kabelbinderbandes 17 reduziert und somit die Zuverlässigkeit des Kabelbinders 13 erhöht.

In Fig. 12 ist nunmehr eine Seitenansicht einer beispielhaften Ausführungsform einer Halteeinrichtung 1 mit einem beispielhaften Kabelbinder 13 dargestellt. Es wird hier deutlich, dass durch die Kombination eines Kabelbinders 13 mit einer erhabenen Anlagefläche 15 an der Innenseite 22 vorliegend mit einer Rampe 18, auf elegante Weise ein Bindegut (welches hier nicht dargestellt ist) berührungsfrei in einem vorgebbaren Abstand d_{A} von der Haltevorrichtung 1 gehalten werden kann. An der Innenseite 22 ist die Anlagefläche 15 für das Bindegut 39 und die Rampe 18 vorliegend durch die Weichkomponente 14 gebildet.

In Fig. 13 zeigt eine perspektivische Darstellung einer Innenseite 22 in einem Abschnitt des Kabelbinderbandes 17. Vorliegend ist die Weichkomponente 14 in Form eines Bandes an der Innenseite 22 des Kabelbinderbandes 17 angeordnet. Die Innenseite 22 ist somit in einem Mittelbereich durch die Weichkomponente 14 und in jeweiligen Randbereichen 12 durch die Hartkomponente 20 gebildet. Durch die Weichkomponente 14 ist hier auch die Anlagefläche 15 für das Bindegut 39 gebildet.

Die Weichkomponente 14 weist im gezeigten Beispiel ein Profil 37 auf. Dieses Profil oder die Struktur hat eine Profiltiefe d_{P}, welche beispielsweise 50 Prozent der Dicke d_{WK} der Weichkomponente 14 beträgt. Im gezeigten Beispiel umfasst das Profil 37 zwei Reihen von erhabenen, gleichförmigen Dreiecken 38, welche mit ihren Spitzen jeweils alternierend entgegengesetzt orientiert senkrecht zur Längs- beziehungsweise x-Richtung des Kabelbinderbandes 17 orientiert sind.

Fig. 14 zeigt eine perspektivische Ansicht einer Haltevorrichtung 1 mit einem Kabelbinder 13 und einem Bindegut 39 im endmontierten Zustand. Dabei wird das Bindegut 39, welches vorliegend eine Vielzahl von Einzelkabeln 40 umfasst, aber genauso gut auch nur ein einzelnes Kabel 40 oder andere Güter wie beispielsweise ein Rohr umfassen kann, innenseitig an einer Innenseite 22 des Kabelbinders 13 durch den Kabelbinder 13 und die Haltevorrichtung 1 in einem vorgegebenen Abstand d_{A} zu der Haltevorrichtung 1 gehalten. Dabei ist der Kabelbinderkopf 16 in diesem Ausführungsbeispiel in der Haltevorrichtung 1 beziehungsweise dem Befestigungskopf 3 der Haltevorrichtung 1 versenkt angeordnet und somit vor weiteren Einflüssen geschützt. Die Haltevorrichtung 1 kommt somit im gezeigten Beispiel vorwiegend oder ausschließlich mit der Hartkomponente 20 des Kabelbinders 13 in Kontakt.

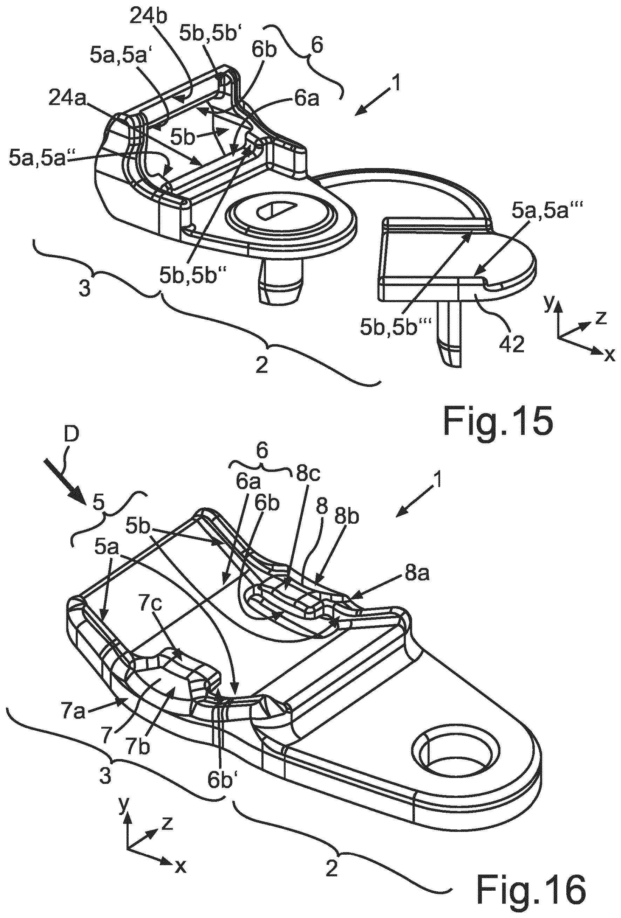

Fig. 15 zeigt eine beispielhafte Variation der Haltevorrichtung aus Fig. 4. In dem gezeigten Beispiel weist die erste Führungskulisse 5 auch unterteilte Stützflächen 5a, 5b auf, welche bei bestimmungsgemäßem Gebrauch jeweils die Kantenseiten 23, 23' des Kabelbinderbandes 17 und/oder des Kabelbinderkopfes 16 an unterschiedlichen, voneinander beabstandeten (also durch einen von Null verschiedenen Abstand getrennten) Bereichen stützen. Die unterteilten Stützflächen 5a, 5b haben also Unter-Stützflächen 5a', 5a", 5a‴, 5b', 5b", 5b‴ welche zumindest bereichsweises, also bereichsweise oder ganz, parallel zueinander verlaufen und den Kabelbinder 13 in den unterschiedlichen Bereichen stützen sollen.

Vorliegend schließen sich die Unter-Stützflächen 5a', 5b' als Seitenschenkel eines Us an die Stützfläche 6a der zweiten Führungskulisse 6 als Bodenschenkel des Us an. Analog schließen sich die Unter-Stützflächen 5a", 5b" als Seitenschenkel eines weiteren Us an die Stützfläche 24b der dritten Führungskulisse 24 als Bodenschenkel des weiteren Us an. Ein weiteres Paar von Unter-Stützflächen 5a‴, 5b‴ ist vorliegend an dem Befestigungsfuß 2 angeordnet, im gezeigten Beispiel an einem beweglichen Klemmelement 42 des Befestigungsfußes 2.

Fig. 16 zeigt eine beispielhafte, nicht beanspruchte Ausführungsform einer Haltevorrichtung. Dabei ist die erste Stützfläche 6a der zweiten Führungskulisse 6 in der Durchschieberichtung, also der x-Richtung, gewölbt. Das Kabelbinderband 13 wird also bei dem bestimmungsgemäßen Durchschieben in positiver oder negativer x-Richtung zu seiner Innenseite 22 hin gebogen, sodass bereichsweise ein Biegen des Kabelbinderbandes 13 um das Bindegut 39 herum vorweg genommen wird. Die Wölbung kann einen vorgegebenen Radius aufweisen, welcher in einer Ebene mit den Normalenvektoren der ersten Stützfläche 6a, also hier in der x-y-Ebene liegt. Damit wird die Montage des Kabelbinders 13 an der Haltevorrichtung 1 und das spätere Befestigen des Bindeguts 39 erleichtert. Vorliegend schließen sich in einem Querschnitt senkrecht zur Stützfläche 6a die Stützflächen 5a, 5b als Seitenschenkel eines Us an die Stützfläche 6a der zweiten Führungskulisse 6 als Bodenschenkel des Us an. Durch die gewölbte Stützfläche 6a wird mit den weiteren Stützflächen 5a, 5b, 6b, 6b' vorliegend eine muldenförmige Aufnahme für den Kabelbinder 13 geschaffen.

Die erste Stützfläche 6a ist im gezeigten Beispiel gegen die weiteren, hier entgegengesetzt orientierten Stützflächen 6b, 6b' versetzt angeordnet. Dafür sind in jeweiligen den weiteren Stützflächen 6b, 6b' gegenüberliegenden Raumbereichen der ersten Stützfläche 6a Aussparungen 43 vorgesehen. Die Stützfläche 6a ist vorliegend also im Rahmen der durch die Krümmung bedingten Abweichung in positiver y-Richtung orientiert, die Stützflächen 6b, 6b' mit der entsprechenden Abweichung in negativer y-Richtung.

Die erste Stützfläche 6a weist vorliegend in Durchschieberichtung D eine größere Ausdehnung auf als die weiteren Stützflächen 6b, 6b'. Aufgrund der Symmetrie kann der Kabelbinder vorliegend auch entgegen der eingezeichneten Durchschieberichtung D in die Haltevorrichtung 1 geschoben werden. Die Ausdehnung der ersten Stützfläche 6a in Durchschieberichtung D ist hier mehr als dreimal so groß sein wie die Ausdehnung der weiteren Stützflächen 6b, 6b' in Durchschieberichtung D. Vorliegend gehen die beiden weiteren Stützflächen 6b beziehungsweise 6b' über die Stützflächen 5b beziehungsweise 5a in die Stützfläche 6a über. Insgesamt wird so durch zwei im Querschnitt in z-Richtung U-förmige Bögen mit der Stützfläche 5b beziehungsweise 5a als jeweiligem Bodenschenkel, welche beide die Stützfläche 6a als Seitenschenkel aufweisen ein C-förmiger Bogen gebildet, durch welchen der Kabelbinder 13 bei bestimmungsgemäßem Gebrauch umgriffen wird. Dabei bilden Mittel- und Endbereich 7b, 7c', 8b, 8c der beiden Arme 7, 8 mit den Stützflächen 6b, 6b' die Enden des Cs. Die Stützfläche 6a ist hier als Rückwand des C-förmigen Bogens senkrecht zum Querschnitt um ein Vielfaches ausgedehnter als Endbereiche 7c, 8c der beiden Arme 7, 8.

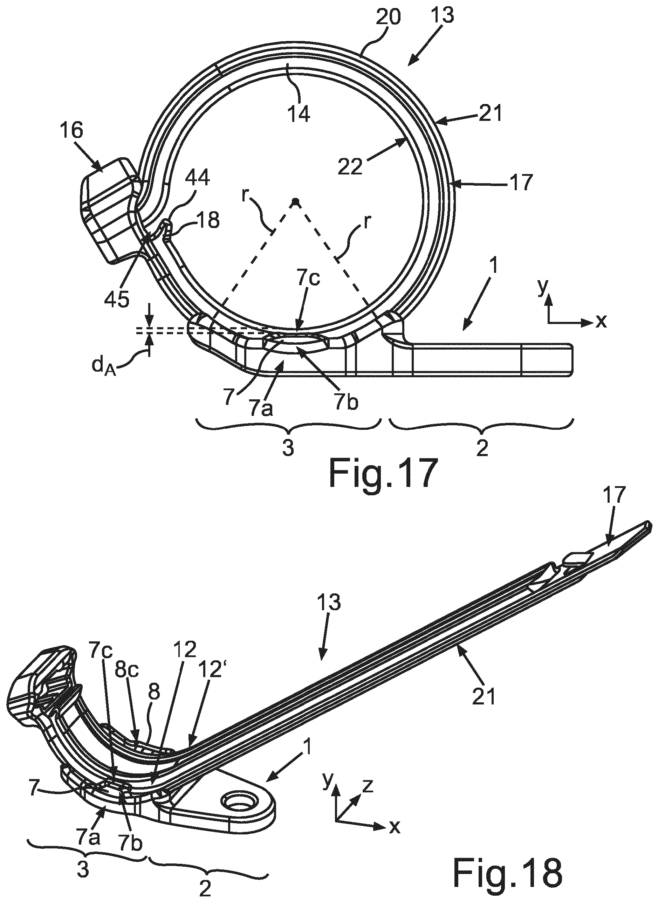

Fig. 17 zeigt die Haltevorrichtung von Fig. 16 mit einem zur Schlaufe geschlossenen beispielhaften Kabelbinder. Gezeigt ist dabei wie die im Vergleich zu Endbereich 7c und Mittelbereich 7b größere Ausdehnung des Fußbereiches 7a in positiver und negativer x-Richtung den Kabelbinder 13 mit der Stützfläche 6a über einen großen Bereich hinweg stützt und dabei der vorgegebene Mindestabstand d_{A} zwischen Haltevorrichtung 1 und Bindegut (nicht dargestellt) eingehalten wird. Auch der Radius r der Krümmung der Stützfläche 6a, welcher hier mit der Krümmung der Schlaufe das Kabelbinders 13 übereinstimmt, ist dargestellt. Durch die Krümmung bedingt ist dabei der Fußbereich 7a in positiver y-Richtung weiter ausgedehnt als der Kopfbereich 7c. Das für den Arm 7 geschriebene gilt hier aus Symmetriegründen auch mutatis mutandis für den Arm 8.

Der Kabelbinder 13 hat vorliegend eine aus der Weichkomponente 14 geformte Rampe 18 in dem kabelbinderkopfnahen Endbereich 30 des Kabelbinderbandes 17. An die Rampe 18 schließt sich hier eine Lippe 44 an, welche eine Lücke 45 zwischen der Weichkomponente 14 in dem Endbereich 30 und in einem in den Kabelbinderkopf 16 eingeschobenen Bereich des Kabelbinderbandes verkleinert.

Fig. 18 zeigt die Haltevorrichtung von Fig. 16 mit einem offenen, in die Haltevorrichtung eingeschobenen beispielhaften Kabelbinder. Die im Vergleich zu Fig. 17 gedrehte Perspektive zeigt, dass die Arme 7, 8 mit ihren Endbereichen 7c, 8c die Randbereiche 12, 12' des Kabelbinders 13 in einem kleineren Bereich umgreifen und die Stützfläche 6a die Außenseite 21 des Kabelbinderbandes 17 in einem größeren Bereich stützt, also an der Außenseite 21 in einem größeren Bereich anliegt.

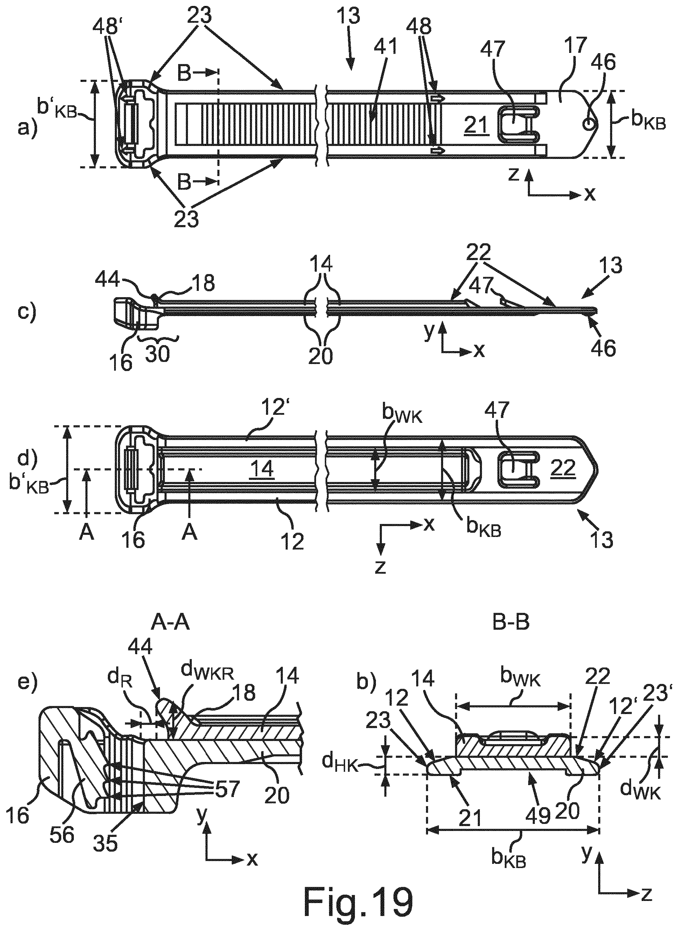

In den Fig. 19a-d ist entsprechend den Fig. 10a-d eine weitere beispielhafte Ausführungsform eines Kabelbinders 13 in unterschiedlichen Seiten- und Schnittansichten dargestellt.

So zeigt die Fig. 10a einen Kabelbinder 13 mit Kabelbinderkopf 16 und Kabelbinderband 17, welches sich mit einer Längsrichtung als Haupterstreckungsrichtung in x-Richtung erstreckt.

Im Gegensatz zu dem in Fig. 10a dargestellten Kabelbinder 13 ist vorliegend ein erhabener kugelsegmentförmiger Gleitvorsprung 46 mittig am kopffernen Endbereich des Kabelbinderbandes angeordnet. Ferner ist zwischen Verzahnung 41 und dem Gleitvorsprung 46 hier auch ein Rastfederelement 47 in dem Kabelbinderband 17 integriert, mit dem das Kabelbinderband vorläufig in dem Kabelbinderkopf verrastet werden kann. In dem kabelbinderkopffernen Endbereich des Kabelbinderbandes 17 und an dem Kabelbinderkopf 16 sind im gezeigten Beispiel auch jeweilige Markierungen 48, 48' angebracht. Die Markierungen 48, 48' sind derart positioniert, dass bei einem Aneinanderlegen der Markierungen 48, 48' durch den Kabelbinder eine Schlaufe mit einem maximalen Radius gebildet wird. Der maximale Radius ist dabei der Radius, bis zu welchem das Kabelbinderband 17 noch zuverlässig mit dem Kabelbinderkopf 16 verrastbar ist.

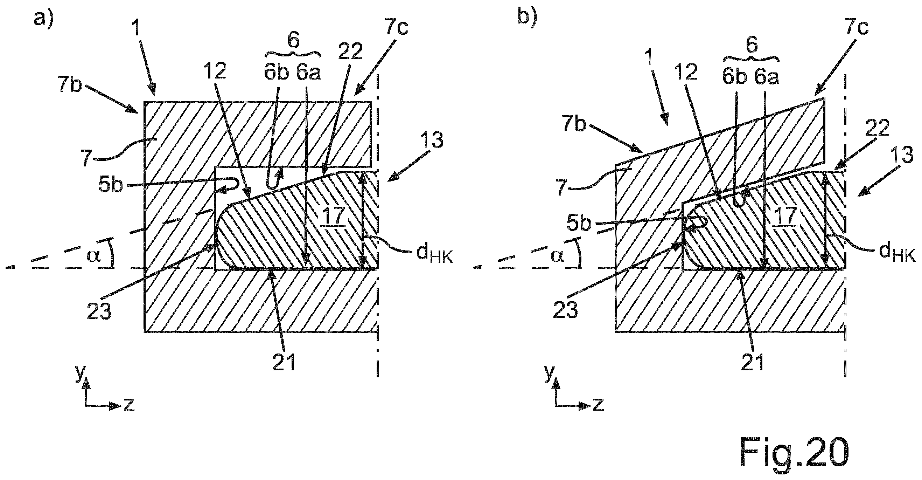

In Fig. 19b ist ein Querschnitt in der in Fig. 19a mit B-B gekennzeichneten Schnittachse dargestellt. Im gezeigten Beispiel ist somit ein Querschnitt durch das Kabelbinderband 17 des Kabelbinders 13 in einer y-z-Ebene zu sehen. Die Weichkomponente 14 ist hier in Form eines Bandes an der Innenseite 22 des Kabelbinders 13 beziehungsweise Kabelbinderbandes 17 angeordnet. Im vorliegenden Ausführungsbeispiel ist die Innenseite 22 gegenüber der Außenseite 21 geneigt, da die Dicke d_{HK} der Hartkomponente in den Randbereichen 12, 12' zu den Kantenseiten 23, 23' hin abnimmt. Dies ist in Fig. 20a-b genauer dargestellt.

In dem kabelbinderkopfnahen ersten Endbereich 30 des Kabelbinderbandes 17 wird in diesem Beispiel durch die Erhöhung der Dicken d_{WK},d_{WK}' der Weichkomponente 14 zum Kabelbinderkopf 16 hin eine Rampe 18 gebildet. Die Weichkomponente 14 weist in dem Bereich der Rampe 18 an der Innenseite 22 des Kabelbinderbandes 17 eine Lippe 44 auf. Die Lippe 44 ist von der Hartkomponente 20 beabstandet und erstreckt sich von der Rampe 18 in Richtung Kabelbinderkopf 16 von dem Kabelbinderband 17 fort. Die Lippe 44 kann also insbesondere als eine Weiterführung der Rampe 18 in Richtung des Kabelbinderkopfes verstanden werden, welche sich zum Kabelbinderkopf 16 hin von dem Kabelbinderband 17 in positiver y-Richtung ablöst. Dies ist nochmals genauer in der Fig. 19e dargestellt.

Fig. 19d zeigt nun eine Draufsicht auf eine Innenseite des Kabelbinders 13. Zu sehen ist hier, dass sich die Weichkomponente 14 entlang dem Kabelbinderband 17 bandartig in Längsrichtung des Kabelbinders 13, also in x-Richtung, erstreckt.

In Fig. 19e ist ein Querschnitt in Längsrichtung in der x-y-Ebene durch die in Fig. 19d mit A-A gekennzeichnete Schnittachse gezeigt. Dabei steigert sich die Dicke d_{WK} der Weichkomponente 14 im Bereich der Rampe 18 zu der Maximaldicke d_{WKR}. In Richtung des Kabelbinderkopfes 16 setzt sich die Rampe 18 hier mittels einer Lippe 44 der Weichkomponente 14 fort. Damit wird der Abstand d_{R} zwischen Weichkomponente 14 und der Innenseite 35 der Rasteinrichtung im Kabelbinderkopf 16 verringert. Die Lippe 44 kann somit in Richtung des Kabelbinderkopfes 16 über einen kabelbinderbandnahen oder - näheren Bereich der Weichkomponente 14 überstehen. Die Lippe 44 ist mit sämtlichen beschriebenen Ausführungsformen kombinierbar.

In dem gezeigten Beispiels weist der Kabelbinderkopf 16 auch eine Rastzunge 56 auf, welche bei Durchschieben des Kabelbinderbandes 17 durch den Kabelbinderkopf 16 mit der Verzahnung 41 verrastet. Dabei greift dann zumindest eine Rastkante 57, vorliegend mehrere (hier drei) Rastkanten, in die Verzahnung ein. Die Rastkante(n) 57 können insbesondere in z-Richtung, also entlang einer Kontaktfläche mit dem Kabelbinderband 17 gewölbt sein.

In Fig. 20a-b ist je ein Detail eines Kabelbinders mit in den Randbereichen geneigter Innenseite mit jeweiligen beispielhaften Haltevorrichtungen im Querschnitt in Breitenrichtung, also in y-z-Ebene, dargestellt. Die Innenseite 22 ist im Randbereich 12 (und entsprechend Fig. 10b symmetriebedingt auch im gegenüberliegenden Randbereich 12') gegenüber der Außenseite 21 des Kabelbinderbandes 17 um einen Winkel α geneigt. Der Winkel α beträgt vorliegend 15 Grad, er kann aber grundsätzlich um eine Toleranz von bis zu 15 Grad von diesem Wert abweichen und somit zwischen 0 Grad und 30 Grad betragen.

Von der Haltevorrichtung 1 ist in Fig. 20a und 20b jeweils nur der Arm 7 mit den entsprechenden Stützflächen 5b, 6b und die Stützfläche 6a gezeigt. Der nicht gezeigte zweite Arm 8 ist entsprechend symmetrisch gestaltet. In Fig. 20a verlaufen die Stützflächen 6a, 6b der zweiten Führungskulisse 6 parallel zueinander und sind in ihrem Abstand an die Dicke d_{HK} des Kabelbinderbandes 17 im Randbereich 12 angepasst. In Fig. 20b sind die (im Wesentlichen) entgegengesetzt orientierten Stützflächen 6a, 6b der zweiten Führungskulisse 6 im Winkel α zueinander geneigt, also im Randbereich 12 an den Verlauf der Dicke d_{HK} des Kabelbinderbandes 17 angepasst. Der gleiche Kabelbinder 13 kann also mit beiden in Fig. 20a-b gezeigten Haltevorrichtungen 1 benutzt werden. Die in Fig. 20b gezeigte Haltevorrichtung 1 hat dabei den Vorteil des erhöhten Abstands zu einem (nicht dargestellten)Bindegut, da der Arm 7 im Mittelbereich 7b in y-Richtung weniger weit hervorsteht. Wegen des verringerten Winkels zwischen den Stützflächen 5b und 6b ist diese Variante auch belastbarer. Die Haltevorrichtung 1 kann insbesondere die weiteren Merkmale der Haltevorrichtung 1 aus Fig. 1 und/oder Fig. 16 aufweisen.

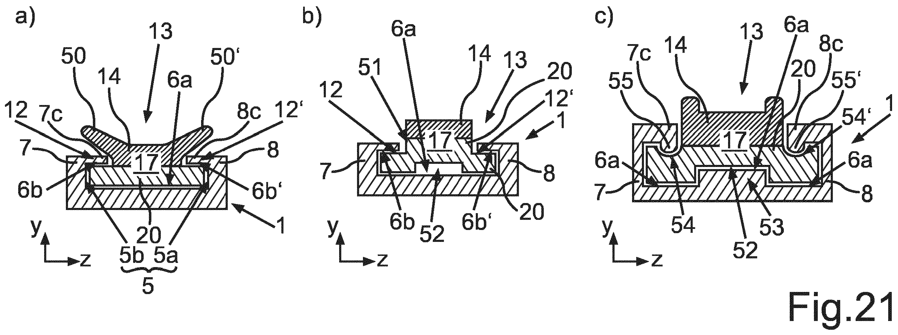

In Fig. 21a-c sind weitere Kabelbinder und Haltevorrichtungen in einer Schnittdarstellung in der Breitenrichtung dargestellt. Wie in Fig. 20a-b ist die Haltevorrichtung 1 dabei jeweils vereinfacht nur mit den Armen 7, 8 und den Stützflächen 5a, 5b, 6a, 6b der ersten und zweiten Führungskulisse 5, 6 dargestellt.

In Fig. 21a bildet die Weichkomponente 14 zusätzlich zu dem beispielsweise in Fig. 10c oder 19c gezeigten innenseitigen Band in einem an die Randbereiche 12, 12' des Kabelbinderbandes angrenzenden jeweiligen Grenzbereich des Bands je einen Flügel 50, 50'. Die Flügel 50, 50' sind hier symmetrisch bezüglich der Mitte des Kabelbinderbandes 17 und erstrecken sich wie das Band über einen Großteil des Kabelbinderbandes 17. In dem gezeigten Querschnitt des Kabelbinderbandes 17 erstrecken die Flügel 50, 50' sich ausgehend von dem Band in einem von Null verschiedenen Abstand von dem entsprechenden Randbereich des Kabelbinderbandes fort von dem Kabelbinderband 17 fort und dem Band. Bei bestimmungsgemäßen Gebrauch ist dann der Endbereich 7c, 8c der Arme zwischen dem jeweiligen Flügel 50, 50' angeordnet und das (nicht dargestellte) Bindegut durch die Flügel 50, 50' vor der Haltevorrichtung 1 geschützt.

In Fig. 21b weist die Hartkomponente 20 zwischen den Randbereichen 12, 12' einen gegenüber den Randbereichen 12, 12' in der Hoch- oder z-Richtung erhabenen Mittelteil 51 auf, auf welchem die Weichkomponente 14 angeordnet ist. Die Randbereiche 12, 12' sind also im Vergleich zur Innenseite der Hartkomponente 20 in z-Richtung abgesenkt und bilden eine Stufe. Vorliegend weist das Kabelbinderband 17 auch außenseitig eine entlang des Kabelbinderbandes 17 verlaufende Aussparung 52, die auch als Nut bezeichnet werden kann.

Auch die in Fig. 21c gezeigte Ausführungsform weist die genannte Aussparung 52 auf. Dabei weist hier die Stützfläche 6a der zweiten Führungskulisse 6 einen entsprechenden Vorsprung 53 auf, welcher bei dem Durchschieben des Kabelbinderbandes 17 durch die Haltevorrichtung in die Aussparung 52 eingreift. Zusätzlich weisen die Randbereiche 12, 12' des Kabelbinderbandes 17 vorliegend jeweils eine entlang des Kabelbinderbandes verlaufende Mulde 54, 54' aufweisen. Die Mulden 54, 54' verlaufen also innenseitig an dem Kabelbinderband 17 und können Teil der Stützflächen 6b, 6b' sein oder aber umgekehrt die Stützflächen 6b, 6b' Teil der Mulden 54, 54'. Entsprechend weist das Kabelbinderband 17 in dem gezeigten Beispiel in den zweiten Führungsflächen 6b, 6b' der zweiten Führungskulisse 6 entsprechenden Nasen 55, 55' auf, welche in die Mulden 54, 54' eingreifen.

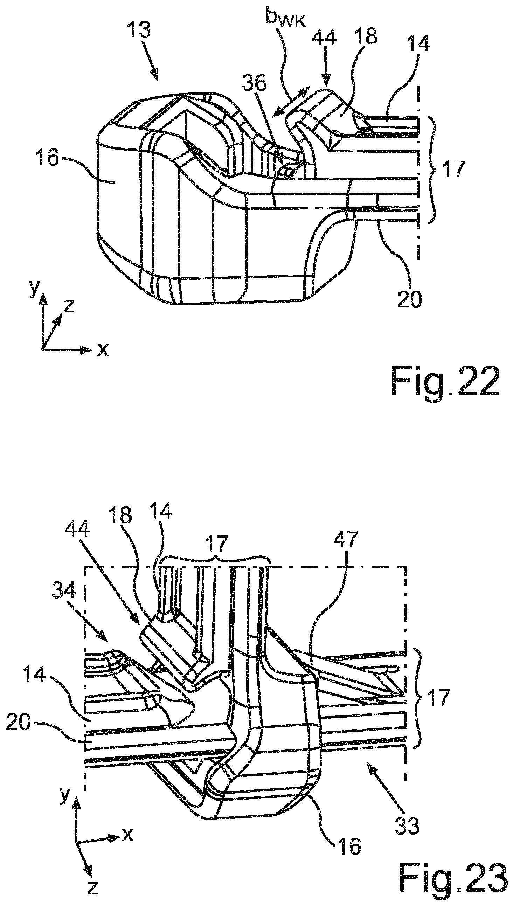

In Fig. 22 ist ein weiterer Kabelbinder gezeigt. Vorliegend erstreckt sich die Lippe 44 an der Rampe 18 über die gesamte Breite b_{WK} der Weichkomponente 14. Die Weichkomponente 14 reicht so besonders nah an das eingesteckte Kabelbinderband 17 heran, wie dies in Fig. 23. gezeigt ist.

In Fig. 23 ist der Kabelbinder von Fig. 22 mit in den Kabelbinderkopf eingestecktem Kabelbinderband gezeigt. Dabei ist das Kabelbinderband 17 mit dem im zweiten Endbereich 33 angeordneten Rastfederelement 47 verrastet, sodass das Kabelbinderband 17 nicht mehr ungezielt aus dem Kabelbinderkopf 16 herausgezogen werden kann. Gleichzeitig verhindert die Schwelle 34 an dem dem Endbereich 33 zugewandten Endstück der Weichkomponente 14, in deren Bereich die Dicke d_{WK} der Weichkomponente 14 erhöht ist, in Verbindung mit der Lippe 44 ein ungewolltes Weiterrutschen des Kabelbinderbandes 17 durch den Kabelbinderkopf 16. Dieser Effekt wird dadurch begünstigt, dass die Schwelle 34 in positiver y-Richtung aus der Weichkomponente 14 hervorragt und die Lippe 44 in negativer y-Richtung von der Rampe 18 absteht.

## Patentansprüche

1. Befestigungssystem mit
zumindest einem Kabelbinder (13), welcher
i) ein verzahntes Kabelbinderband (17) und
ii) einen Kabelbinderkopf (16) mit einer Rasteinrichtung zum Verrasten mit dem verzahnten Kabelbinderband (17) aufweist, wobei
iii) das Kabelbinderband (17) eine Hartkomponente (20) und eine im Vergleich zur Hartkomponente (20) weiche Weichkomponente (14) aufweist, wobei durch die Hartkomponente (20) die Außenseite (21) und die Kantenseiten (23, 23') des Kabelbinderbandes (17) zumindest bereichsweise gebildet sind, sowie die Weichkomponente (14) sich in Form zumindest eines Bandes innenseitig in einer Längsrichtung des Kabelbinderbandes (17) entlang der Hartkomponente (20) über einen Großteil des Kabelbinderbandes (17) erstreckt, und wobei in einem dem Kabelbinderkopf näheren Endbereich des Kabelbinderbandes (17) die Dicke der Weichkomponente zum Kabelbinderkopf (16) hin rampenartig zunimmt, und mit zumindest einer zum Kabelbinder (13) separaten Haltevorrichtung (1) zum Befestigen
des Systems an einer Komponente, mit
a) einem Befestigungsfuß (2) zum Befestigen der Haltevorrichtung (1) an der Komponente, und
b) einem an dem Befestigungsfuß (2) angeordneten Befestigungskopf (3), der einen Durchlassbereich (4) zum Durchschieben des Kabelbinderbandes (17) durch die Haltevorrichtung (1) und zum Halten des Kabelbinders (13) an der Haltevorrichtung (1) aufweist,
wobei der Durchlassbereich (4) zum konturgenauen Aufnehmen des Kabelbinders (13) zumindest zwei unterschiedlich ausgerichtete Führungskulissen (5, 6) mit jeweils zumindest einem Paar von entgegengesetzt orientierten Stützflächen (5a, 5b, 6a, 6b) aufweist, und
wobei die Stützflächen (5a, 5b, 6a, 6b) zur Führung zugeordneter Flächenbereiche des Kabelbinderkopfes (16) und des Kabelbinderbandes (17) ausgelegt sind, sodass bei mit einem Bindegut (39) endmontiertem Kabelbinder (13) der Kabelbinderkopf (16) und das Kabelbinderband (17) jeweils zumindest teilweise zwischen den jeweiligen Paaren von Stützflächen (5a, 5b, 6a, 6b) der jeweiligen Führungskulisse (5, 6) angeordnet ist,
die erste Führungskulisse (5) mit dem zumindest einen ersten Paar an Stützflächen (5a, 5b) zur Anlage an Flächenbereichen an Kantenseiten (23, 23') des Kabelbinderkopfes (16) ausgelegt ist, und
der Befestigungskopf (3) im Durchlassbereich (4) zwei Arme (7, 8) aufweist, welche
- einen jeweiligen, dem Befestigungsfuß (2) zugewandten Fußbereich (7a, 8a) und einen jeweiligen, dem Befestigungsfuß (2) abgewandten Endbereich (7c, 8c) aufweisen und
- einen jeweiligen zwischen Fußbereich (7a, 8a) und Endbereich (7c, 8c) liegenden Mittelbereich (7b, 8b) mit einer jeweiligen innenliegenden Stützfläche (5a, 5b), wobei die innenliegenden Stützflächen (5a, 5b) Teil der ersten Führungskulisse (5) mit dem ersten Paar an Stützflächen (5a, 5b) sind, wobei
die beiden Arme (7, 8) durch eine einzige Brücke (9) verbunden sind, und der Kabelbinder (13) im endmontierten Zustand in einer zum Halten des Bindeguts (39) eingestellten Halteform des Kabelbinders (13) derart positionierbar ist, dass das von dem Kabelbinder (13) gehaltene Bindegut (39) nur von dem Kabelbinder (13) berührt wird und somit berührungslos und beabstandet zur Haltevorrichtung (1) angeordnet ist.

2. Befestigungssystem nach Anspruch 1,
**dadurch gekennzeichnet, dass**
die Haltevorrichtung (1) zumindest ein zusätzliches Rastelement (27) aufweist, durch welches der Kabelbinderkopf (16) in der für den endmontierten Zustand vorgesehenen Endposition in dem Befestigungskopf (3) verrastbar ist.

3. Kabelbinder (13) für ein Befestigungssystem nach Anspruch 1, mit
a) einem verzahnten Kabelbinderband (17) mit einer Innenseite (22) und mit einer Außenseite (21), wobei in einem endmontierten Zustand des Kabelbinders (13) um ein Bindegut (39) herum die Innenseite (22) zu dem Bindegut (39) hin und die Außenseite (21) von dem Bindegut (39) weg orientiert ist, und
b) einem Kabelbinderkopf (16) mit einer Rasteinrichtung zum Verrasten mit dem verzahnten Kabelbinderband (17),
wobei das Kabelbinderband (17) eine Hartkomponente (20) und eine im Vergleich zur Hartkomponente (20) weiche Weichkomponente (14) aufweist, und durch die Hartkomponente (20) die Außenseite (21) und die Kantenseiten (23, 23') des Kabelbinderbandes (17) zumindest bereichsweise gebildet sind, sowie die Weichkomponente (14) sich in Form zumindest eines Bandes innenseitig in einer Längsrichtung des Kabelbinderbandes (17) entlang der Hartkomponente (20) über einen Großteil des Kabelbinderbandes (17) erstreckt, und
in einem dem Kabelbinderkopf (16) näheren ersten Endbereich (30) des Kabelbinderbandes (17) die Dicke (d_{wk}) der Weichkomponente (14) zu einem dem Kabelbinderkopf (16) zugewandten Ende des Kabelbinderbandes (17) hin rampenartig zunimmt,
**dadurch gekennzeichnet, dass**
die Weichkomponente (14) in dem Endbereich (30) mit der erhöhten Dicke (d_{wk}) an der Innenseite (22) des Kabelbinderbandes (17) eine Lippe (44) aufweist, welche von der Hartkomponente (20) beabstandet ist und sich von dem Endbereich (30) mit der erhöhten Dicke (d_{wk}) in Richtung Kabelbinderkopf (16) über die gesamte Breite (b_{WK}) der Weichkomponente (14) erstreckt.

4. Kabelbinder (13) nach Anspruch 3,
**dadurch gekennzeichnet, dass**
die Innenseite (22) des Kabelbinderbandes (17) in an die Kantenseiten (23, 23') angrenzenden Randbereichen (12, 12') des Kabelbinderbandes (17) zumindest bereichsweise durch die Hartkomponente (20) gebildet ist.

5. Verfahren zum Befestigen eines Bindeguts (39) mittels einer Haltevorrichtung (1) und eines Kabelbinders (13) an einer weiteren Komponente, wobei die Haltevorrichtung (1) einen Befestigungsfuß (2) zum Befestigen der Haltevorrichtung (1) an der weiteren Komponente aufweist, sowie einen an dem Befestigungsfuß (2) angeordneten Befestigungskopf (3) mit einem Durchlassbereich (4) zum Durchschieben des Kabelbinderbandes (13) durch die Haltevorrichtung (1) und zum Halten des Kabelbinders (13) an der Haltevorrichtung (1), mit den Verfahrensschritten:
- Befestigen der Haltevorrichtung (1) an der weiteren Komponente;
- erstes Durchschieben des vorderen Endes des Kabelbinderbandes (17) durch den Durchlassbereich (4) der Haltevorrichtung (1) in einer ersten Richtung (D);
- Rotieren des Kabelbinderbandes (17) in dem Durchlassbereich (4) um eine zur ersten Richtung (D) senkrechte Achse (Z);
- Befestigen des Bindeguts (39) an dem Kabelbinder (13) und somit an der Haltevorrichtung (1), durch Bilden einer Kabelbinderschlaufe um das Bindegut (39) und Durchstecken des vorderen Endes des Kabelbinderbandes (17) durch dessen Kabelbinderkopf (16);
wobei das Bilden der Kabelbinderschlaufe um das Bindegut (39) ein zweites Durchschieben des Kabelbinderbandes (17) durch den Durchlassbereich (4) der Haltevorrichtung (1) in einer zur ersten Richtung entgegengesetzten Richtung umfasst, wobei für das Verfahren ein Befestigungssystem nach Anspruch 1 verwendet wird.

## Claims

1. A fastening system comprising
at least one cable tie (13) which has
i) a toothed cable tie strap (17) and
ii) a cable tie head (16) comprising a latching device for latching with the toothed cable tie strap (17), wherein
iii) the cable tie strap (17) has a hard component (20) and a soft component (14), which is soft in comparison with the hard component (20), wherein the outer side (21) and the edge sides (23, 23') of the cable tie strap (17) are at least regionally formed by the hard component (20), and the soft component (14) extends in the form of at least one strap at the inner side in a longitudinal direction of the cable tie strap (17) along the hard component (20) over a large part of the cable tie strap (17), and wherein, in an end region of the cable tie strap (17) that is closer to the cable tie head, the thickness of the soft component increases in a ramp-like manner towards the cable tie head (16); and
at least one holding device (1), which is separate from the cable tie (13), for fastening the system to a component, said holding device comprising
a) a fastening foot (2) for fastening the holding device (1) to the component, and
b) a fastening head (3) which is arranged at the fastening foot (2) and which has a passage region (4) for pushing the cable tie strap (17) through the holding device (1) and for holding the cable tie (13) at the holding device (1),
wherein, in order to receive the cable tie (13) with contour accuracy, the passage region (4) has at least two differently oriented guide contours (5, 6), each having at least one pair of oppositely oriented support surfaces (5a, 5b, 6a, 6b), and
wherein the support surfaces (5a, 5b, 6a, 6b) are adapted to guide associated areal regions of the cable tie head (16) and the cable tie strap (17) so that, when the cable tie (13) is finally assembled with a binding material (39), the cable tie head (16) and the cable tie strap (17) are each arranged at least partly between the respective pairs of support surfaces (5a, 5b, 6a, 6b) of the respective guide contour (5, 6),
the first guide contour (5) comprising the at least one first pair of support surfaces (5a, 5b) is adapted to contact areal regions at edge sides (23, 23') of the cable tie head (16), and
the fastening head (3) has two arms (7, 8) in the passage region (4) that have
- a respective foot region (7a, 8a) facing the fastening foot (2) and a respective end region (7c, 8c) facing away from the fastening foot (2), and
- a respective middle region (7b, 8b) which is disposed between the foot region (7a, 8a) and the end region (7c, 8c) and which has a respective inwardly disposed support surface (5a, 5b), wherein the inwardly disposed support surfaces (5a, 5b) are part of the first guide contour (5) comprising the first pair of support surfaces (5a, 5b),
wherein
the two arms (7, 8) are connected by a single bridge (9) and the cable tie (13) can be positioned in the final assembled state in a holding form of the cable tie (13), which holding form is set to hold the binding material (39), such that the binding material (39) held by the cable tie (13) is only contacted by the cable tie (13) and is thus arranged in a contactless manner and spaced apart from the holding device (1).

2. A fastening system according to claim 1,
**characterized in that**
the holding device (1) has at least one additional latching element (27) by which the cable tie head (16) can be latched in the fastening head (3) in the end position provided for the final assembled state.

3. A cable tie (13) for a fastening system according to claim 1, said cable tie comprising
a) a toothed cable tie strap (17) having an inner side (22) and an outer side (21), wherein, in a final assembled state of the cable tie (13) around a binding material (39), the inner side (22) is oriented towards the binding material (39) and the outer side (21) is oriented away from the binding material (39), and
b) a cable tie head (16) comprising a latching device for latching with the toothed cable tie strap (17),
wherein the cable tie strap (17) has a hard component (20) and a soft component (14), which is soft in comparison with the hard component (20), and the outer side (21) and the edge sides (23, 23') of the cable tie strap (17) are at least regionally formed by the hard component (20), and the soft component (14) extends in the form of at least one strap at the inner side in a longitudinal direction of the cable tie strap (17) along the hard component (20) over a large part of the cable tie strap (17), and in a first end region (30) of the cable tie strap (17) that is closer to the cable tie head (16), the thickness (d_{wk}) of the soft component (14) increases in a ramp-like manner towards an end of the cable tie strap (17) facing the cable tie head (16),
**characterized in that**
the soft component (14) has a lip (44) in the end region (30) with the increased thickness (d_{wk}) at the inner side (22) of the cable tie strap (17), said lip being spaced apart from the hard component (20) and extending from the end region (30) with the increased thickness (d_{wk}) towards the cable tie head (16) over the entire width (b_{WK}) of the soft component (14).

4. A cable tie (13) according to claim 3,
**characterized in that**
the inner side (22) of the cable tie strap (17) is at least regionally formed by the hard component (20) in marginal regions (12, 12') of the cable tie strap (17) that adjoin the edge sides (23, 23').

5. A method for fastening a binding material (39) by means of a holding device (1) and a cable tie (13) to a further component, wherein the holding device (1) has a fastening foot (2) for fastening the holding device (1) to the further component, and a fastening head (3) which is arranged at the fastening foot (2) and which has a passage region (4) for pushing the cable tie strap (13) through the holding device (1) and for holding the cable tie (13) at the holding device (1), comprising the method steps:
- fastening the holding device (1) to the further component;
- first pushing of the front end of the cable tie strap (17) through the passage region (4) of the holding device (1) in a first direction (D);
- rotating the cable tie strap (17) in the passage region (4) about an axis (Z) perpendicular to the first direction (D);
- fastening the binding material (39) to the cable tie (13) and thus to the holding device (1) by forming a cable tie loop around the binding material (39) and pushing the front end of the cable tie strap (17) through its cable tie head (16);
wherein the forming of the cable tie loop around the binding material (39) comprises a second pushing of the cable tie strap (17) through the passage region (4) of the holding device (1) in a direction opposite to the first direction, wherein a fastening system according to claim 1 is used for the method.

## Revendications

1. Système de fixation comprenant
au moins une attache de câble (13) qui présente
i) un ruban de serrage denté (17) et
ii) une tête de serrage (16) munie d'un dispositif d'encliquetage pour s'encliqueter avec le ruban de serrage denté (17), sachant que
iii) le ruban de serrage (17) comprend un composant dur (20) et un composant souple (14) plus souple par rapport au composant dur (20), la face extérieure (21) et les faces de bord (23, 23') du ruban de serrage (17) étant formées au moins localement par le composant dur (20), et le composant souple (14) s'étendant sous la forme d'au moins une bande du côté intérieur dans une direction longitudinale du ruban de serrage (17) le long du composant dur (20) sur une majeure partie du ruban de serrage (17), et, dans une zone d'extrémité du ruban de serrage (17) plus proche de la tête de serrage, l'épaisseur du composant souple augmente de manière progressive vers la tête de serrage (16),
et comprenant au moins un dispositif de retenue (1) séparé de l'attache de câble (13) et destiné à fixer le système à un composant, comprenant
a) un pied de fixation (2) destiné à fixer le dispositif de retenue (1) au composant, et
b) une tête de fixation (3) disposée sur le pied de fixation (2), qui présente une zone de passage (4) pour faire passer le ruban de serrage (17) à travers le dispositif de retenue (1) et pour retenir l'attache de câble (13) sur le dispositif de retenue (1),
la zone de passage (4), destinée à recevoir l'attache de câble (13) avec un ajustement précis, comprenant au moins deux coulisses de guidage (5, 6) orientées différemment, chacune présentant au moins une paire de surfaces d'appui (5a, 5b, 6a, 6b) orientées de manière opposée, et
les surfaces d'appui (5a, 5b, 6a, 6b) étant conçues pour guider des zones de surface associées de la tête de serrage (16) et du ruban de serrage (17), de sorte que, lorsque l'attache de câble (13) est montée définitivement sur un objet à serrer (39), la tête de serrage (16) et le ruban de serrage (17) sont disposés chacun au moins en partie entre les paires respectives de surfaces d'appui (5a, 5b, 6a, 6b) de la coulisse de guidage respective (5, 6), la première coulisse de guidage (5) munie de ladite au moins une première paire de surfaces d'appui (5a, 5b) étant conçue pour s'appuyer contre des zones de surface des faces de bord (23, 23') de la tête de serrage (16), et la tête de fixation (3) comprenant, dans la zone de passage (4), deux bras (7, 8) qui présentent chacun
- une zone de pied respective (7a, 8a), tournée vers le pied de fixation (2), et une zone d'extrémité respective (7c, 8c), détournée du pied de fixation (2), et
- une zone centrale respective (7b, 8b) située entre la zone de pied (7a, 8a) et la zone d'extrémité (7c, 8c) et munie d'une surface d'appui intérieure respective (5a, 5b), les surfaces d'appui intérieures (5a, 5b) faisant partie de la première coulisse de guidage (5) munie de la première paire de surfaces d'appui (5a, 5b),
les deux bras (7, 8) étant reliés par un seul pont (9), et l'attache de câble (13) pouvant être positionnée, à l'état monté définitivement, en une forme de retenue de l'attache de câble (13) adaptée pour retenir l'objet à serrer (39), de telle sorte que l'objet à serrer (39) retenu par l'attache de câble (13) ne soit en contact qu'avec l'attache de câble (13) et soit donc disposé sans contact et à distance du dispositif de retenue (1).

2. Système de fixation selon la revendication 1,
**caractérisé en ce que** le dispositif de retenue (1) comporte au moins un élément d'encliquetage supplémentaire (27) permettant de faire encliqueter la tête de serrage (16) dans la tête de fixation (3), dans la position finale prévue pour l'état monté définitif.

3. Attache de câble (13) pour un système de fixation selon la revendication 1, comprenant
a) un ruban de serrage denté (17) ayant une face intérieure (22) et une face extérieure (21), sachant que, à l'état monté définitif de l'attache de câble (13) autour d'un objet à serrer (39), la face intérieure (22) est tournée vers l'objet à serrer (39) et la face extérieure (21) est détournée de l'objet à serrer (39), et
b) une tête de serrage (16) munie d'un dispositif d'encliquetage pour s'encliqueter avec le ruban de serrage denté (17),
le ruban de serrage (17) comprenant un composant dur (20) et un composant souple (14) plus souple par rapport au composant dur (20), et la face extérieure (21) et les faces de bord (23, 23') du ruban de serrage (17) étant formées au moins localement par le composant dur (20), et le composant souple (14) s'étendant sous la forme d'au moins une bande du côté intérieur dans une direction longitudinale du ruban de serrage (17) le long du composant dur (20) sur une majeure partie du ruban de serrage (17), et dans une première zone d'extrémité (30) du ruban de serrage (17) plus proche de la tête de serrage (16), l'épaisseur (d_{wk}) du composant souple (14) augmente de manière progressive vers une extrémité du ruban de serrage (17) tournée vers la tête de serrage (16),
**caractérisée en ce que**
le composant souple (14) présente, dans la zone d'extrémité (30) d'épaisseur accrue (d_{wk}), une lèvre (44) sur la face intérieure (22) du ruban de serrage (17), laquelle lèvre est espacée du composant dur (20) et s'étend depuis la zone d'extrémité (30) d'épaisseur accrue (d_{wk}) en direction de la tête de serrage (16) sur toute la largeur (b_{wk}) du composant souple (14).

4. Attache de câble (13) selon la revendication 3,
**caractérisée en ce que**
la face intérieure (22) du ruban de serrage (17) est formée au moins localement par le composant dur (20) dans les zones de bordure (12, 12') du ruban de serrage (17) adjacentes aux faces de bord (23, 23').

5. Procédé pour fixer un objet à serrer (39) à un autre composant à l'aide d'un dispositif de retenue (1) et d'une attache de câble (13), le dispositif de retenue (1) comprenant un pied de fixation (2) destiné à fixer le dispositif de retenue (1) à l'autre composant, ainsi qu'une tête de fixation (3) disposée sur le pied de fixation (2) et présentant une zone de passage (4) pour faire passer le ruban de serrage (13) à travers le dispositif de retenue (1) et pour retenir l'attache de câble (13) sur le dispositif de retenue (1), comprenant les étapes de procédé consistant à :
- fixer le dispositif de retenue (1) à l'autre composant ;
- faire passer une première fois l'extrémité avant du ruban de serrage (17) à travers la zone de passage (4) du dispositif de retenue (1) dans une première direction (D) ;
- faire tourner le ruban de serrage (17) dans la zone de passage (4) autour d'un axe (Z) perpendiculaire à la première direction (D) ;
- fixer l'objet à serrer (39) à l'attache de câble (13) et donc au dispositif de retenue (1), en formant une boucle de serrage autour de l'objet à serrer (39) et en enfilant l'extrémité avant du ruban de serrage (17) à travers la tête de serrage (16) de celui-ci ;
la formation de la boucle de serrage autour de l'objet à serrer (39) consistant à faire passer une deuxième fois le ruban de serrage (17) à travers la zone de passage (4) du dispositif de retenue (1) dans une direction opposée à la première direction, le procédé utilisant un système de fixation selon la revendication 1.
